# EUROPÄISCHE PATENTSCHRIFT

(11) **EP 4 357 820 B1**
(45) Veröffentlichungstag und Bekanntmachung des Hinweises auf die Patenterteilung: **23.10.2024**
(21) Anmeldenummer: 22203055.3
(22) Anmeldetag: 21.10.2022
(51) Int. Cl.: G01V 3/10, G01V 13/00, G01N 27/72

(54) **VERFAHREN UND VORRICHTUNG ZUR DETEKTION VON METALLKÖRPERN IN PRÜFOBJEKTEN**
METHOD AND DEVICE FOR DETECTING METAL BODIES IN TEST OBJECTS
PROCÉDÉ ET APPAREIL DE DÉTECTION DE CORPS MÉTALLIQUES DANS DES OBJETS À TESTER

(43) Veröffentlichungstag der Anmeldung: 24.04.2024
(73) Patentinhaber: Cassel Meßtechnik GmbH, 37127 Dransfeld (DE)
(72) Erfinder: Wiedemann, Oliver, 37083 Göttingen (DE)
(74) Vertreter: REHBERG HÜPPE + PARTNER

(56) Entgegenhaltungen:
- CN-A- 113 466 966
- DE-A1- 19 954 716
- US-A1- 2020 073 007

## Beschreibung

### TECHNISCHES GEBIET DER ERFINDUNG

Die Erfindung betrifft Verfahren zur Detektion von Metallkörpern in Prüfobjekten und eine Vorrichtung zur Durchführung dieser Verfahren. Genauer betrifft die Erfindung Verfahren mit den Merkmalen des Oberbegriffe der unabhängigen Patentansprüche 1, 4 und 14 und eine Vorrichtung mit den Merkmalen des Oberbegriffs des unabhängigen Patentanspruchs 15.

Das nichtinvasive Untersuchen von Prüfobjekten darauf, ob sie Metallkörper umfassen, wird auf verschiedenen technischen Gebieten durchgeführt. Ein Gebiet ist die Kontrolle von Produkten beispielsweise in der Lebensmittel- und in anderen Konsumgüterindustrien auf metallische Verunreinigungen. Ein anderes Gebiet ist der Schutz von Verarbeitungsmaschinen vor Metallkörpern, welche die Verarbeitungsmaschinen beschädigen könnten. Noch ein anderes Gebiet ist die Kontrolle von Personen auf mitgeführte Waffen, d. h. die untersuchten Gegenstände können auch Menschen sein. Dabei kommt es darauf an, festzustellen, ob der jeweilige Gegenstand, der beispielsweise aufgrund seines Wasser- und/oder Salzgehalts selbst elektrisch leitfähig sein kann, einen Metallkörper umfasst, welcher ihn von einem ordnungsgemäßen oder ungefährlichen Gegenstand unterscheidet.

### STAND DER TECHNIK

Aus der EP 2 625 551 B1 ist ein Metalldetektionssystem mit einer Sendespule und zwei symmetrisch zu der Sendespule angeordneten und in Quadrupolkonfiguration in Reihe geschalteten Empfangsspulen bekannt. Die Sendespule ist an eine Sendereinheit angeschlossen, welche Sendesignale mit wählbaren Arbeitsfrequenzen ausgibt. Die in Reihe geschalteten Empfangsspulen sind über eine Filtereinrichtung an eine Auswerteinrichtung angeschlossen. Ohne ein Prüfobjekt in dem Metalldetektionssystem gleichen sich die in den beiden Empfangsspulen induzierten Spannungen aus. Wenn ein Prüfobjekt durch die Spulen hindurchgeführt wird, tritt ein Messsignal auf, das von den Eigenschaften des Prüfobjekts abhängig ist. Die Auswerteinrichtung wertet das Messsignal bezüglich Phase und Amplitude aus. Dabei werden zunächst bei verschiedenen Arbeitsfrequenzen der Sendereinheit Phasen und Amplituden der zugehörigen Signalanteile für das jeweilige Prüfobjekt mit einem Metallkörper in verschiedenen Größen bestimmt. Daraus werden mehrere Arbeitsfrequenzen ermittelt, bei denen die Unterschiede des Messsignals im Vergleich zu dem Prüfobjekt ohne den Metallkörper besonders groß sind. Im Betrieb des Metalldetektionssystems werden die ermittelten Arbeitsfrequenzen von der Sendereinheit gleichzeitig angewandt. In der Filtereinrichtung werden die Signalanteile des Messsignals entsprechend gefiltert und dann getrennt voneinander in der Auswerteinrichtung ausgewertet.

Aus der EP 4 016 138 A1 ist eine Vorrichtung zur Detektion von Metallkörpern in und an sich gegenüber der Vorrichtung bewegenden Prüfobjekten bekannt, die eine Sendeeinrichtung, um bei mehreren Arbeitsfrequenzen ein magnetisches Wechselfeld mit einer Sendespule hervorzurufen, eine Empfangseinrichtung, um das von den sich bewegenden Gegenständen beeinflusste magnetische Wechselfeld mit mindestens einer Empfangsspule zu detektieren und ein von dem detektierten magnetischen Wechselfeld abhängiges Empfangssignal auszugeben, eine Filtereinrichtung, um Teilsignale, die jeweils einer der Arbeitsfrequenzen zugeordnet sind, aus dem Empfangssignal heraus zu filtern, und eine Auswerteeinrichtung aufweist, um die Teilsignale auszuwerten. Die Sendespule ist Teil eines mehrfach resonanten Schwingkreises der Sendeeinrichtung, der bei jeder der mehreren Arbeitsfrequenzen eine Resonanzfrequenz aufweist. Ebenso ist die mindestens eine Empfangsspule Teil eines mehrfach resonanten Schwingkreises der Empfangseinrichtung, der bei jeder der mehreren Arbeitsfrequenzen eine Resonanzfrequenz aufweist.

Insbesondere dann, wenn eine Vorrichtung zur Detektion von verschieden spezifizierten Metallkörpern in verschiedenen Prüfobjekten eingesetzt wird, ist die Vorrichtung auf die jeweils zu überprüfenden Prüfobjekte und die zu detektierenden Metallkörper einzustellen. Üblicherweise werden dazu exemplarische Prüfobjekte ohne Metallkörper durch die Vorrichtung geführt und die dabei auftretenden Veränderungen eines in der Vorrichtung hervorgerufenen magnetischen Wechselfelds erfasst. Dann werden Prüfobjekte so präpariert, dass sie jeweils einen der zu detektierenden Metallkörper aufweisen, und zwar an verschiedenen Stellen der Prüfobjekte.

Diese präparierten Prüfobjekte werden ebenfalls durch die Vorrichtung geführt, und die dabei auftretenden Veränderungen des magnetischen Wechselfelds werden ebenfalls erfasst. Dann wird, soweit dies möglich ist, eine Veränderungsgrenze für die Veränderungen des magnetischen Wechselfelds bestimmt, die die Veränderungen bei Prüfobjekten mit Metallkörper von den Veränderungen von Prüfobjekten ohne Metallkörper abgrenzt. Die Veränderungsgrenze wird typischerweise als maximale Amplitude der Veränderung des magnetischen Wechselfelds bei einem Prüfobjekt ohne Metallkörper definiert. Diese maximale Amplitude kann eine Funktion der Phase sein, mit der die Veränderung gegenüber dem unveränderten magnetischen Wechselfeld auftritt. Wenn diese Veränderungsgrenze dann von der Veränderung des magnetischen Wechselfelds durch eines zu überprüfenden Prüfobjekts überschritten wird, wird dies als Hinweis auf das Vorhandensein eines Metallkörpers interpretiert und ein Metallwarnsignal ausgegeben.

Bei diesem bekannten Vorgehen tritt nicht nur erheblicher Aufwand beim erstmaligen Einstellen der Vorrichtung auf die jeweiligen Prüfobjekte auf. Auch dann, wenn sich die Eigenschaften der Prüfobjekte und/oder die Bedingungen, unter denen die Vorrichtung betrieben wird, ändern, muss die Einstellung der Vorrichtung wiederholt oder zumindest überprüft werden, um sicher zu stellen, dass die spezifizierten Metallkörper auch weiterhin erkannt werden. Hinzu kommt, dass sich die Eigenschaften der Prüfobjekte und die Bedingungen, unter denen die Vorrichtung betrieben wird, schleichend und/oder unbemerkt über eine Charge von grundsätzlich gleichen Prüfobjekten hinweg ändern können. Beispielsweise kann sich die Temperatur der Prüfobjekte über eine solche Charge hinweg erheblich ändern, was großen Einfluss auf die von den Prüfobjekten hervorgerufenen Veränderungen des magnetischen Wechselfelds haben kann. Einen sehr großen Unterschied weisen beispielsweise die Veränderungen des magnetischen Wechselfelds durch ein gefrorenes Prüfobjekt und durch dasselbe Prüfobjekt im aufgetauten Zustand auf. Die Folge unerkannter Änderungen bei den Prüfobjekten und/oder den Bedingungen, unter denen die Vorrichtung betrieben wird, kann sein, dass zu Prüfobjekten mit Metallkörpern kein Metallwarnsignal ausgegeben wird. Anders gesagt erkennt die Vorrichtung die vorgegebenen Metallkörper nicht zuverlässig in allen Prüfobjekten.

Aus der US 2020 / 0 073 007 A1 ist eine Metalldetektionsvorrichtung mit den Merkmalen der Oberbegriffe der unabhängigen Patentansprüche 1, 4 und 14 bekannt. Die erste Veränderungsfunktion wird dabei von einer Metalleinflusssignalspeichereinheit bereitgestellt, die die erste Veränderungsfunktion für mehrere Metallkörper aus unterschiedlichen Metallen und mit unterschiedlichen Größen speichert. Jede dieser gespeicherten ersten Veränderungsfunktionen ist eine vierte Veränderung des magnetischen Wechselfelds, die beim Bewegen nur des jeweiligen Metallkörpers durch das magnetische Wechselfeld erfasst wurde.

Aus der DE 199 54 716 A1 ist ein Verfahren zur Funktionsfähigkeitsüberprüfung eines Metalldetektors in einem Metallseparationssystem bekannt, das einen von dem Metalldetektor gesteuerten Metallabscheider enthält. In dem Metallseparationssystem wird ein zu überwachender Fördergutstrom durch das Feld einer von einem Signalgenerator gespeisten Sendespule geführt, das sich einstellende Feld mit einer Empfangsspule aufgenommen und die Ausgangssignale beider Spulen einer Auswerteschaltung zur Erkennung störender Metallteilchen zugeführt, deren Ausgangssignal zur Steuerung des Metallabscheiders dient. Zur Prüfung der Funktionsfähigkeit des Systems dient ein Testsignal, das mit einem Testsignalgenerator jeweils zum gewünschten Prüfzeitpunkt erzeugt wird. Das Testsignal simuliert ein störendes Metallteilchen und wird einer im Spulenbereich des Metalldetektors angeordneten Zusatzspule zur Erzeugung eines Zusatzfelds zugeführt, das sich im Bereich der Empfangsspule dem Feld des Signalgenerators überlagert. Als Kriterium für die Funktionsfähigkeit des Metalldetektors dient das durch das Testsignal ausgelöste Ausgangssignal der Auswerteschaltung.

Aus der CN 113 466 966 A ist eine Metalldetektionsvorrichtung mit einem Detektor und einer ersten und einer zweiten Fördervorrichtung, die durch einen Detektionsbereich des Detektors fördern, bekannt. Die erste Fördervorrichtung ist zum Fördern von Prüfobjekten durch den Detektionsbereich vorgesehen, während die zweite Fördervorrichtung dazu dient, ein Prüfobjekt mit einem Metallkörper durch den Testbereich zu führen, um den Detektor in Intervallen zu testen. Die Metalldetektionsvorrichtung steuert einen Abscheider, um defekte Produkte zu verwerfen.

### AUFGABE DER ERFINDUNG

Der Erfindung liegt die Aufgabe zugrunde, Verfahren und eine Vorrichtung zur Detektion von Metallkörpern in Prüfobjekten aufzuzeigen, die das Einstellen auf verschiedene Prüfobjekte erleichtern und/oder sicherstellen, dass erkannt wird, wenn infolge von Variationen, die bei den Prüfobjekten oder den Bedingungen des Betriebs der Vorrichtung auftreten, die Metallkörper nicht mehr sicher detektiert werden.

### LÖSUNG

Die Aufgabe der Erfindung wird durch die Verfahren mit dem Merkmal der unabhängigen Patentansprüche 1, 4 und 14 und durch die Vorrichtung mit den Merkmalen des Patentanspruchs 15 gelöst.

Die abhängigen Patentansprüche betreffen bevorzugte Ausführungsformen der erfindungsgemäßen Verfahren.

### BESCHREIBUNG DER ERFINDUNG

Bei den erfindungsgemäßen Verfahren zur Detektion von Metallkörpern in Prüfobjekten wird ein magnetisches Wechselfeld hervorgerufen. Durch das magnetische Wechselfeld werden exemplarische Prüfobjekte ohne Metallkörper mit definierter Geschwindigkeit einzeln hindurchbewegt. Dabei werden erste Veränderungen des magnetischen Wechselfelds durch die einzeln hindurchbewegten exemplarischen Prüfobjekte erfasst. Unter Verwendung der ersten Veränderungen wird eine Veränderungsgrenze für Prüfobjekte ohne Metallkörper einer vorgegebenen Form, Größe und Zusammensetzung bestimmt. Anschließend werden zu prüfende Prüfobjekte einzeln durch das magnetische Wechselfeld hindurchbewegt, und es wird eine zweite Veränderung des magnetischen Wechselfelds durch das jeweilige einzeln hindurchbewegte zu prüfenden Prüfobjekt erfasst. Die zweite Veränderung wird mit der zuvor bestimmten Veränderungsgrenze verglichen. Dann, wenn die zweite Veränderung die Veränderungsgrenze überschreitet, wird eine Metallwarnsignal generiert und ausgegeben.

Bei den Verfahren nach den unabhängigen Patentansprüchen 1 und 4 wird beim Bestimmen der Veränderungsgrenze mindestens eine dritte Veränderung, die eine der ersten Veränderungen oder eine von den ersten Veränderungen abgeleitete generalisierte Veränderung ist, mit unterschiedlichen zeitlichen Versätzen mit einer ersten Veränderungsfunktion, die einer vierten Veränderung des magnetischen Wechselfelds beim Bewegen nur des Metallkörpers der vorgegebenen Form, Größe und Zusammensetzung mit der definierten Geschwindigkeit durch das magnetische Wechselfeld hindurch entspricht, zu fiktiven fünften Veränderungen überlagert. Die Veränderungsgrenze wird so bestimmt, dass sie von allen fiktiven fünften Veränderungen, aber von keiner der ersten Veränderungen überschritten wird.

Die Bezeichnung der verschiedenen Veränderungen des magnetischen Wechselfelds mit Ordnungszahlen als erste Veränderung, zweite Veränderung usw. dient hier und im Folgenden ausschließlich ihrer Unterscheidung und zur einfachen Bezugnahme. Dasselbe gilt in Bezug auf die erste Veränderungsfunktion und im Folgenden definierte weitere Veränderungsfunktionen.

Die vorgegebene Form der Metallkörper kann insbesondere eine Kugel sein. Bei einer Kugel ist die Orientierung der Metallkörper zu dem magnetischen Wechselfeld unerheblich. Wenn die vorgegebene Form der Metallkörper keine Kugel ist, kann eine einzelne Orientierung des Metallkörpers zu dem magnetischen Wechselfeld berücksichtigt werden, in der die vierte Veränderung besonders klein ausfällt, insbesondere minimal ist. Alternativ können mehrere Orientierungen des Metallkörpers zu dem magnetischen Wechselfeld berücksichtigt werden, beispielsweise zwei Orientierungen seiner Haupterstreckungsrichtung längs und quer zu einer Spulenachse einer Spulenanordnung für das Hervorrufen des magnetischen Wechselfelds und für das Erfassen der Veränderung des magnetischen Wechselfelds.

Die fiktiven fünften Veränderungen entsprechen Veränderungen des magnetischen Wechselfelds durch reale präparierte Prüfobjekte mit realen Metallkörpern. Dabei entspricht der jeweilige zeitliche Versatz der ersten Veränderungsfunktion zu der dritten Veränderung einer relativen Lage des Metallkörpers gegenüber dem präparierten Prüfobjekt in Richtung dessen Bewegung durch das magnetische Wechselfeld.

Wenn die dritte Veränderung eine der ersten Veränderungen ist, entsprechen die daraus resultierenden fünften Veränderungen dem zu dieser ersten Veränderung zugehörigen exemplarischen Prüfobjekt, dem der Metallkörper an verschiedenen Stellen hinzugefügt wurde.

Idealerweise wird jede der ersten Veränderungen infolge eines der exemplarischen Prüfobjekte ohne Metallkörper mit den unterschiedlichen zeitlichen Versätzen mit der ersten Veränderungsfunktion zu fiktiven fünften Veränderungen überlagert, so dass die fiktiven fünften Veränderungen einer großen Zahl von präparierten Prüfobjekten mit Metallkörpern an unterschiedlichen Stellen entsprechen. Grundsätzlich kann aber auch nur eine der ersten Veränderungen genutzt werden, beispielsweise die, von der begründet anzunehmen ist, dass sie von der zu bestimmenden Veränderungsgrenze am weitesten entfernt liegt. Außerdem kann als dritte Veränderung eine generalisierte Veränderung verwendet werden, die von den ersten Veränderungen abgeleitet ist, beispielsweise als deren Mittelwert, insbesondere aber indem sie aus den zu allen Zeitpunkten kleinsten Werten aller ersten Veränderungen zusammengesetzt ist.

Die verschiedenen realen und fiktiven Veränderungen des magnetischen Wechselfelds treten mit unterschiedlichen Amplituden und Phasen gegenüber dem magnetischen Wechselfeld auf. Der Momentanwert der jeweiligen Veränderung ist ein komplexer Wert, der über die Passage, d. h. das Hindurchbewegen des jeweiligen Prüfobjekts durch das magnetische Wechselfeld variiert. Die Geschwindigkeit dieser Variation hängt von der Geometrie und der Ausdehnung des magnetischen Wechselfelds und von der Geschwindigkeit ab, mit der das Prüfobjekt durch das magnetische Wechselfeld hindurch bewegt wird.

Die Veränderungsgrenze, die bestimmt wird, kann ein einziger Maximalwert für die Amplitude der zweiten Veränderungen des magnetischen Wechselfelds durch die zu prüfenden Prüfobjekte sein. Vielflach wird die Veränderungsgrenze eine Funktion der Phase sein, mit der die zweite Veränderung gegenüber dem hervorgerufenen magnetischen Wechselfeld auftritt. Typischerweise ist die Veränderungsgrenze bei Darstellung in Polarkoordinaten dann eine von einem Kreis abweichende, aber dennoch geschlossene Linie um den Ursprung. Grundsätzlich kann die Veränderungsgrenze eine maximale Amplitude sein, die nicht nur von der Phase gegenüber dem hervorgerufenen magnetischen Wechselfeld, sondern auch von der relativen Lage des Prüfobjekts gegenüber dem magnetischen Wechselfeld, das heißt von dem relativen Zeitpunkt, zu dem der betrachtete Momentanwert der zweiten Veränderungen im Verlauf der zweiten Veränderung auftritt, abhängig sein. Alternativ oder zusätzlich zu einer Obergrenze für die Amplitude der zweiten Veränderung kann die Veränderungsgrenze auch eine Untergrenze für die Amplitude der zweiten Veränderung mit der jeweiligen Phase und gegebenenfalls zu dem jeweiligen Zeitpunkt setzen. Die Überlagerung der dritten Veränderung mit der ersten Veränderungsfunktion kann eine destruktive Überlagerung sein, sodass die zugehörige fünfte Veränderung zumindest zu bestimmten Zeitpunkten eine kleinere Amplitude mit einer bestimmten Phase aufweisen kann als die zugrunde liegende dritte Veränderung.

Beim Bestimmen der Veränderungsgrenze derart, dass sie von allen fünften Veränderungen, aber von keiner der ersten Veränderungen überschritten wird, wird bei dem Verfahren nach Patentanspruch 4 zunächst überprüft, ob dieses Kriterium beim Bestimmen der Veränderungsgrenze überhaupt erfüllt werden kann. Was geschieht, wenn dies nicht der Fall ist, wird weiter unten erläutert. Wenn die Überprüfung das Ergebnis hat, dass die Veränderungsgrenze so bestimmt werden kann, dass sie alle fünften Veränderungen von allen ersten Veränderungen trennt, weil alle fünften Veränderungen von allen ersten Veränderungen beabstandet sind, kann die Veränderungsgrenze mit gleichen Teilabständen zu den fünften Veränderungen und den ersten Veränderungen festgelegt werden, oder aber näher an den ersten Veränderungen, um auch kleinere Metallkörper in den Prüfobjekten zu detektieren, oder näher an den fünften Veränderungen, um ein falsches Detektieren eines tatsächlich nicht vorhandenen Metallkörpers in einem Prüfobjekt und ein damit verbundenes unnötiges Ausgeben des Warnsignals möglichst zu verhindern.

Wenn zum Erfassen der Veränderung des magnetischen Wechselfelds eine Spulenanordnung verwendet wird, die ohne Veränderung des magnetischen Wechselfelds kein Messsignal ausgibt, beispielsweise eine Spulenanordnung mit zwei in Quadrupolkonfiguration in Reihe geschalteten gleichen Empfangsspulen, die symmetrisch zu einer Sendespule angeordnet sind, beschreibt das Messsignal unmittelbar die interessierenden Veränderungen des magnetischen Wechselfelds. Das Messsignal weist grundsätzlich dieselbe Frequenz wie das erzeugte magnetische Wechselfeld auf, ist diesem gegenüber aber in der Regel phasenverschoben. Die Phasenverschiebung des Messsignals ist die hier angesprochene Phase der jeweiligen Veränderung.

Das originäre Messsignal, das beim Erfassen der tatsächlichen Veränderung des magnetischen Wechselfelds erhalten wird, kann insbesondere die Amplitude der jeweiligen Veränderung in zwei als x- und y-Kanal bezeichneten Signalkanälen anzeigen, zwischen denen ein Phasenversatz von 90 Grad herrscht, so dass der x-Kanal den Realteil und der y-Kanal den Imaginärteil des komplexen Werts des Momentanwerts der jeweiligen Veränderung anzeigt.

Die mindestens eine dritte Veränderung wird beim dem erfindungsgemäßen Verfahren amplituden- und phasenrichtig mit dem jeweiligen zeitlichen Versatz mit der ersten Veränderungsfunktion überlagert. Dies bedeutet, dass zu den komplexen Werten der dritten Veränderung, die ebenfalls komplexen Werte der ersten Veränderungsfunktion vektoriell addiert werden, um die komplexen Werte der jeweiligen fiktiven fünften Veränderung zu erhalten.

Beim Einhalten dieser Vorgabe entsprechen die fiktiven fünften Veränderungen mit hoher Genauigkeit Veränderungen des magnetischen Wechselfelds, die sich bei realen präparierten Prüfobjekten mit durch den jeweiligen zeitlichen Versatz definierter Relativlage eines realen Metallkörpers ergeben. Die Entsprechung geht soweit, dass die fiktiven fünften Veränderungen reale präparierte Prüfobjekte mit realen Metallkörpern für das Einstellen auf die jeweiligen Prüfobjekte und die Metallkörper mit der vorgegebenen Form, Größe und Zusammensetzung ersetzen können.

Bei dem erfindungsgemäßen Verfahren werden die unterschiedlichen zeitlichen Versätze vorzugsweise so ausgewählt, dass sie unterschiedlichen Lagen des Metallkörpers der vorgegebenen Form, Größe und Zusammensetzung am vorderen Ende, am hinteren Ende und an mindestens einem Punkt mit Abständen zu dem vorderen Ende und dem hinteren Ende, also beispielsweise in der Mitte des jeweiligen exemplarischen Prüfobjekts entsprechen. Diese unterschiedlichen Lagen des Metallkörpers sind die, die üblicherweise auch beim Präparieren von realen Prüfobjekten mit realen Metallkörpern gewählt werden.

Die erste Veränderungsfunktion wird vorzugsweise so festgelegt, dass sie der vierten Veränderung des magnetischen Wechselfelds beim Bewegen des Metallkörpers der vorgegebenen Form, Größe und Zusammensetzung durch das magnetische Wechselfeld auf einer Spulenachse einer Spulenanordnung für das Hervorrufen des magnetischen Wechselfelds und für das Erfassen der Veränderung des magnetischen Wechselfelds entspricht. Beim Bewegen des Metallkörpers auf dieser Spulenachse ruft der Metallkörper die kleinsten Veränderungen des magnetischen Wechselfelds hervor, so dass er am schwierigsten zu detektieren ist. Wenn dieses Bewegen des Metallkörpers beziehungsweise die daraus resultierende vierte Veränderung des magnetischen Wechselfelds der ersten Veränderungsfunktion zugrunde gelegt wird, zeigen die fiktiven fünften Veränderungen den kleinsten Unterschied zu der zugehörigen dritten Veränderung. Die auf dieser Basis bestimmte Veränderungsgrenze stellt damit die Detektion der Metallkörper in den zu überprüfenden Prüfobjekten auch unter ungünstigen Bedingungen sicher.

Dabei ist es unerheblich, dass die fiktiven fünften Veränderungen realen präparierten Prüfobjekten mit realen Metallkörpern entsprechen können, die sich zumindest teilweise außerhalb des jeweiligen Prüfobjekts befinden, weil die Spulenachse das durch das Magnetfeld bewegte Prüfobjekt nicht oder nicht über dessen gesamte Länge schneidet. Das erfindungsgemäße Verfahren simuliert dann zwar präparierte Prüfobjekte mit Metallkörpern, die aufgrund ihrer Lage gegenüber dem jeweiligen Prüfobjekt schwieriger zu detektieren sind als in realen Prüfobjekten enthaltene Metallkörper. Hieraus resultiert aber allenfalls eine etwas engere Veränderungsgrenze mit einer noch etwas höheren Sicherheit beim Detektieren der vorgegebenen Metallkörper.

Bei dem erfindungsgemäßen Verfahren nach Patentanspruch 4 wird beim Bestimmen der Veränderungsgrenze die mindestens eine dritte Veränderung mit den unterschiedlichen zeitlichen Versätzen mit einer zweiten Veränderungsfunktion, die eine sechste Veränderung des magnetischen Wechselfelds beim Bewegen eines Metallkörpers der vorgegebenen Form und Zusammensetzung, aber einer kleineren Größe mit der definierten Geschwindigkeit durch das magnetische Wechselfeld hindurch entspricht, zu fiktiven siebten Veränderungen überlagert. Dann wird geprüft, ob die Veränderungsgrenze so bestimmt werden kann, dass sie weiterhin nicht von allen ersten Veränderungen, aber neben allen fünften Veränderungen auch von allen siebten Veränderungen überschritten wird. Wenn dies der Fall ist, wird ein Detektionsniveauanzeigesignal generiert und ausgegeben, welches anzeigt, dass auch Metallkörper mit der kleineren Größe detektiert werden könnten.

Der Anwender des erfindungsgemäßen Verfahrens kann dann entscheiden, ob er gezielt auch die kleineren Metallkörper detektieren und dazu nötigenfalls die Veränderungsgrenze anpassen möchte. Auch wenn er sich dagegen entscheidet, und die Veränderungsgrenze so bestimmt bleibt, dass sie von allen fünften Veränderungen, aber von keiner der ersten Veränderungen überschritten wird, wird die Veränderungsgrenze vielfach so liegen, dass auch einige der kleineren Metallkörper detektiert werden

Der nicht auszuschließende Fall, dass es nicht möglich ist, die Veränderungsgrenze so zu bestimmen, dass sie von allen fünften Veränderungen, aber von keiner der ersten Veränderungen überschritten wird, wurde bereits angesprochen. Bei dem Verfahren nach Patentanspruch 4 wird dieser Fall durch ein Fehlersignal angezeigt. Dieses Fehlersignal kann mit einem Detektionsniveauanzeigesignal kombiniert werden, welches anzeigt, dass zwar nicht die Metallkörper mit der vorgegebenen Größe, aber doch Metallkörper mit einer bestimmten größeren Größe detektiert werden könnten.

Weiterhin wird bei dem Verfahren nach Patentanspruch 4 dann, wenn es nicht möglich ist, die Veränderungsgrenze so zu bestimmen, dass sie von allen fünften Veränderungen, aber von keiner der ersten Veränderungen überschritten wird, die mindestens eine dritte Veränderung mit den unterschiedlichen zeitlichen Versätzen mit mindestens einer dritten Veränderungsfunktion, die einer achten Veränderung des magnetischen Wechselfelds beim Bewegen eines Metallkörpers der vorgegebenen Form und Zusammensetzung, aber einer größeren Größe mit der definierten Geschwindigkeit durch das magnetische Wechselfeld entspricht, zu fiktiven neunten Veränderungen überlagert werden. Dann wird geprüft, ob die Grenze so bestimmt werden kann, dass sie von allen neunten Veränderungen, aber von keiner der ersten Veränderungen überschritten wird. Wenn dies der Fall ist, wird das Detektionsniveauanzeigesignal generiert und ausgegeben, welches anzeigt, dass zwar nicht die Metallkörper mit der vorgegebenen Größe, aber doch Metallkörper mit der größeren Größe sicher detektiert werden könnten.

Beim Bestimmen der Veränderungsgrenze kann die mindestens eine dritte Veränderung weiterhin mit unterschiedlichen zeitlichen Versätzen mit mindestens einer vierten Veränderungsfunktion, die einer zehnten Veränderung des magnetischen Wechselfelds beim Bewegen eines Metallkörpers der vorgegebenen Form und Größe, aber einer anderen Zusammensetzung mit der definierten Geschwindigkeit durch das magnetische Wechselfeld entspricht, zu noch fiktiven elften Veränderungen überlagert werden. Die Veränderungsgrenze kann dann so bestimmt werden, dass sie zusätzlich von allen elften Veränderungen überschritten wird. Die so bestimmte Veränderungsgrenze ist auch zum Detektieren von Metallkörpern der vorgegebenen Form und Größe, aber der anderen Zusammensetzung geeignet.

Bei dem erfindungsgemäßen Verfahren können die vorgegebene Zusammensetzung und die andere Zusammensetzung aus solchen Zusammensetzungen des Metallkörpers ausgewählt werden, die potentiell in den Prüfobjekten enthalten sind und die das magnetische Wechselfeld auf unterschiedliche Weise verändern. Hierzu zählen ferromagnetische, ferrimagnetische, paramagnetische und diamagnetische Materialien mit und ohne ausgeprägte elektrische Leitfähigkeit. Konkret können die Zusammensetzungen des Metallkörpers beispielsweise aus Eisen, magnetischem und nicht magnetischem Edelstahl, verschiedenen Buntmetallen und Blei ausgewählt werden.

Bei dem erfindungsgemäßen Verfahren kann jede zur Anwendung kommende Veränderungsfunktion aus einer von der vorgegebenen Größe des Metallkörpers sowie von einer Frequenz und einer Feldstärke des magnetischen Wechselfelds abhängigen Grundfunktion, die für Metallkörper einer festen Form und Zusammensetzung und für zueinander äquivalente Spulenanordnungen für das Hervorrufen des magnetischen Wechselfelds und das Erfassen der Veränderungen des magnetischen Wechselfelds definiert ist, durch zeitliches Skalieren bestimmt werden. Die feste Form kann dabei eine Kugel, die feste Zusammensetzung beispielsweise Eisen, magnetischer oder nicht magnetischer Edelstahl, ein Buntmetall oder Blei sein. Das zeitliche Skalieren kann mit dem Kehrwert der definierten Geschwindigkeit und einer Länge der Spulenanordnung in Richtung der Bewegung der Prüfobjekte erfolgen.

Überraschenderweise reichen wenige solche Grundfunktionen aus, um das erfindungsgemäße Verfahren für verschiedene Metallkörper bei verschiedenen Frequenzen und Feldstärken des magnetischen Wechselfelds unter Verwendung verschiedener Spulenanordnungen durchführen zu können. Wenn nur kugelförmige Metallkörper betrachtet werden und die Frequenz und die Feldstärke des magnetischen Wechselfelds immer gleich sind, reduzieren sich die Variablen der jeweiligen Grundfunktion auf den Durchmesser des Metallkörpers. Wenn die definierte Geschwindigkeit immer dieselbe ist, muss diese Grundfunktion für eine bestimmte Spulenanordnung nur ein einziges Mal zeitlich skaliert werden.

Bestimmt werden kann die Grundfunktion unter Erfassen von zwölften Veränderungen des magnetischen Wechselfelds beim Bewegen von Metallkörpern der jeweiligen festen Form und Zusammensetzung, aber unterschiedlichen bekannten Größen mit bekannter Geschwindigkeit durch magnetische Wechselfelder unterschiedlicher bekannter Frequenzen und Feldstärken in einer der zueinander äquivalenten Spulenanordnungen bekannter Länge in Richtung ihrer Spulenachse.

Auch wenn bereits darauf hingewiesen wurde, dass die fiktiven Veränderungen bei dem erfindungsgemäßen Verfahren präparierte Prüfobjekte mit Metallkörpern ersetzen können, kann mit Metallkörpern der vorgegebenen Form, Größe und Zusammensetzung und unterschiedlichen Lagen in präparierten Prüfobjekten überprüft werden, ob zu diesen präparierten Prüfobjekten der Metallhinweis zuverlässig ausgegeben wird.

Bei dem erfindungsgemäßen Verfahren kann jedes Prüfobjekt, zu dem das Metallwarnsignal ausgegeben wird, aussortiert und/oder mit einem Metallwarnhinweis auf einen enthaltenen Metallkörper versehen werden. Unter einem solchen Versehen mit einem Metallwarnhinweis ist zum Beispiel ein unmittelbares Aufkleben oder Aufdrucken des Metallwarnhinweises auf das jeweilige Prüfobjekt und/oder ein virtuelles Verknüpfen des Metallwarnhinweises mit dem Prüfobjekt, beispielsweise in einer Datenbank und beispielsweise über eine Seriennummer des Prüfobjekts, zu verstehen.

Alternativ oder zusätzlich zum Durchführen des erfindungsgemäßen Verfahrens zum Bestimmen der Veränderungsgrenze für konkrete Prüfobjekte und/oder Metallkörper, kann das erfindungsgemäße Verfahren auch genutzt werden, um fortlaufend festzustellen, ob die zum Detektieren der Metallkörper verwendete Veränderungsgrenze so bestimmt ist, dass sie bei jedem durch das magnetische Wechselfeld hindurchbewegten Prüfobjekts tatsächlich dazu geeignet wäre, einen Metallkörper der vorgegebenen Form, Größe und Zusammensetzung zu erkennen. Bei dem Verfahren nach Patentanspruch 14 wird zumindest zu jedem zu überprüfenden Prüfobjekt, zu dem kein Metallwarnsignal ausgegeben wird, die zugehörige zweite Veränderung mit den unterschiedlichen zeitlichen Versätzen mit der ersten Veränderungsfunktion zu fiktiven dreizehnten Veränderungen überlagert werden. Dann wird überprüft, ob alle dreizehnten Veränderungen die Veränderungsgrenze überschreiten. Wenn dies nicht der Fall ist, wird ein Detektionsfehlerwarnhinweis generiert und ausgegeben. Der Detektionsfehlerwarnhinweis zeigt an, dass bei dem jeweiligen zu überprüfenden Prüfobjekt ein Metallkörper der vorgegebenen Form, Größe und Zusammensetzung an zumindest einer Stelle in dem Prüfobjekt nicht erkannt worden wäre, so dass kein Metallwarnsignal ausgegeben worden wäre. Dies ist gleichbedeutend damit, dass die Durchführung des Verfahrens bei Anwendung der bestimmten Veränderungsgrenze keine sichere Detektion der Metallkörper der vorgegebenen Form, Größe und Zusammensetzung in allen zu prüfenden Prüfobjekten leisten kann.

Diese Situation kann eintreten, wenn die exemplarischen Prüfobjekte die Bandbreite der Prüfobjekte nicht ausreichend abdeckten, und daher eine ungeeignete Veränderungsgrenze bestimmt wurde, oder wenn das Prüfobjekt, zu dem der Detektionsfehlerwarnhinweis generiert und ausgegeben wird, ungewöhnliche Eigenschaften aufweist, die auf einen Fehler bei dem zu überprüfenden Prüfobjekt hinweisen. Im letzteren Fall sollte der Detektionsfehlerwarnhinweis nur vereinzelt auftreten. Dann kann das zugehörige Prüfobjekt als Reaktion auf den Detektionsfehlerwarnhinweis ausgesondert werden. Wenn der Detektionsfehlerwarnhinweis jedoch von Anfang an relativ häufig auftritt, kann es sinnvoll sein, die zur Detektion der Metallkörper vorgegebener Form, Größe und Zusammensetzung verwendete Veränderungsgrenze neu zu bestimmen.

Wenn der Detektionsfehlerwarnhinweis jedoch erst nach einiger Zeit der Durchführung des erfindungsgemäßen Verfahrens häufiger auftritt, kann seine Ursache darin begründet sein, dass sich die zu überprüfenden Prüfobjekte und/oder die Umgebungsbedingungen bei der Durchführung des erfindungsgemäßen Verfahrens mit der Zeit geändert haben. Auch dann kann es sinnvoll sein, die zur Detektion der Metallkörper vorgegebener Form, Größe und Zusammensetzung bestimmte Veränderungsgrenze neu zu bestimmen.

Weiterhin wird bei dem Verfahren nach Patentanspruch 14 dann, wenn das Detektionsfehlerwarnhinweis generiert und ausgegeben wird, die zugehörige zweite Veränderung mit den unterschiedlichen zeitlichen Versätzen mit der mindestens einen dritten Veränderungsfunktion zu fiktiven vierzehnten Veränderungen überlagert. Dann kann überprüft werden, ob alle vierzehnten Veränderungen die Veränderungsgrenze überschreiten. Wenn dies der Fall ist, wird ein Detektionsniveauwarnsignal generiert und ausgegeben, welches anzeigt, dass zwar nicht die Metallkörper mit der vorgegebenen Größe, aber doch die Metallkörper mit der größeren Größe sicher detektiert würden. Wenn eine Detektion der Metallkörper mit der größeren Größe als ausreichend angesehen wird, kann die zur Detektion der Metallkörper bestimmte Veränderungsgrenze weiter verwendet werden.

Eine erfindungsgemäße Vorrichtung zur Detektion von Metallkörpern in Prüfobjekten weist eine Spulenanordnung für das Hervorrufen eines magnetischen Wechselfelds und für das Erfassen von Veränderungen des magnetischen Wechselfelds, eine Fördervorrichtung zum Bewegen von Prüfobjekten durch die Spulenanordnung und eine Auswerteeinrichtung zum Auswerten der erfassten Veränderungen des magnetischen Wechselfelds auf. Die Auswerteeinrichtung ist zur automatisierten Durchführung der kennzeichnenden Merkmale des Verfahrens nach einem der Ansprüche 1, 4 und 14 ausgebildet. Die Auswerteeinrichtung kann auch zu den voranstehend erläuterten Ausgestaltungen dieser kennzeichnenden Merkmale ausgebildet sein.

Die erfindungsgemäße Vorrichtung kann auf einer aus der EP 4 016 138 A1 bekannten Vorrichtung zur Detektion von Metallkörpern basieren, bei der eine Sendespule und mindestens eine Empfangsspule jeweils Teil eines mehrfach resonanten Schwingkreises sind, der bei jeder von mehreren Arbeitsfrequenzen der Vorrichtung eine Resonanzfrequenz aufweist, und bei der aus einem Empfangssignal Teilsignale, die jeweils einer der Arbeitsfrequenzen zugeordnet sind, herausgefiltert und getrennt ausgewertet werden. Auf einer solchen Vorrichtung wird das erfindungsgemäße Verfahren bei jeder der Arbeitsfrequenzen separat durchgeführt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Es versteht sich, dass Verbesserungen und Modifikationen an der hier im Detail beschriebenen vorliegenden Erfindung vorgenommen werden können, ohne vom Umfang der Erfindung abzuweichen, welche in den beigefügten Ansprüchen offenbart ist.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Ansicht einer Ausführungsform der erfindungsgemäßen Vorrichtung.
- **Fig. 2**: ist ein Flussdiagramm eines erfindungsgemäßen Verfahrens.
- **Fig. 3 bis Fig. 7**: sind Flussdiagramme optionaler zusätzlicher Schritte des erfindungsgemäßen Verfahrens gemäß Fig. 4.
- **Fig. 8**: zeigt Veränderungen magnetischer Wechselfelder mit Frequenzen von 75 kHz und 300 kHz durch einen hindurchgeführten kugelförmigen Metallkörper aus einem Nichteisenmetall (NFe) mit einem Durchmesser von 6 mm, wobei jeweils die Amplituden in einem X-Kanal und in einem Y-Kanal über der Zeit aufgetragen sind.
- **Fig. 9**: ist eine Auftragung der Amplituden der Veränderungen magnetischer Wechselfelder mit Frequenzen von 75 kHz und 300 kHz durch hindurchgeführte kugelförmige Metallkörper aus Eisen über dem Durchmesser der Metallkörper.
- **Fig. 10**: ist eine Auftragung der Phasen der Veränderungen gemäß Fig. 2 über dem Durchmesser der Metallkörper.
- **Fig. 11**: zeigt eine Veränderung eines magnetischen Wechselfelds durch ein Prüfobjekt, Veränderungsfunktionen für drei Metallkörper unterschiedlicher Größe, aus Überlagerungen der Veränderung durch das Prüfobjekt mit jeweils einer der Veränderungsfunktionen für die Metallkörper unterschiedlicher Größe resultierende fiktive Veränderungen sowie eine Veränderungsgrenze zum Detektieren eines Metallkörper in dem Prüfobjekt, jeweils aufgetragen in Polarkoordinaten; und
- **Fig.12**: ist eine Fig. 11 entsprechende Auftragung, bei der fiktive Veränderungen des magnetischen Wechselfelds dargestellt sind, die aus Überlagerungen der Veränderung durch das Prüfobjekt jeweils mit derselben Veränderungsfunktionen für denselben Metallkörper vorgegebener Größe, aber mit drei unterschiedlichen zeitlichen Versätzen resultieren.

### FIGURENBESCHREIBUNG

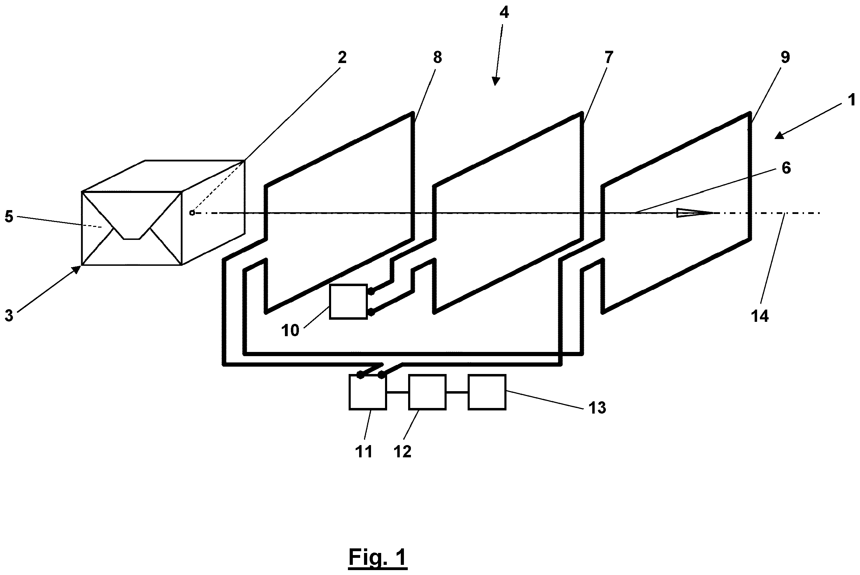

Die in **Fig. 1** in einer Ausführungsform dargestellte Vorrichtung 1 dient zur Detektion von Metallkörpern 2 in Prüfobjekten 3, die durch eine Spulenanordnung 4 der Vorrichtung 1 bewegt werden. In Fig. 1 ist als Prüfobjekt 3 eine gefüllte Schachtel 5 gezeigt, in der sich neben einem Produkt ungewollt ein Metallkörper 2 befinden kann. Das Prüfobjekt 3 wird in einer Förderrichtung 6, von einer hier nicht dargestellten Fördereinrichtung, beispielsweise auf einem Förderband, durch Spulen 7 bis 9 der Spulenanordnung 4 hindurchbewegt. Die hier jeweils nur mit einer Windung dargestellten Spulen 7 bis 9 können auch mehrere Windungen aufweisen. Die mittlere Spule ist eine Sendespule 7, die Teil einer Sendeeinrichtung 10 ist. Die äußeren Spulen sind zwei Empfangsspulen 8 und 9. Die Empfangsspulen 8 und 9 sind symmetrisch zu der Sendespule 7 in zu der Sendespule 7 parallelen Ebenen angeordnet, und zwar typischerweise näher bei der Sendespule 7 als dies Fig. 1 suggeriert. Die Empfangsspulen 8 und 9 können dieselbe Geometrie, d. h. geometrische Form und Größe, wie die Sendespule 7 aufweisen. Die Empfangsspulen 8 und 9 bilden eine Empfangseinrichtung 11 und sind in Quadrupolkonfiguration in Reihe geschaltet. Die Sendeeinrichtung 10 ist dazu ausgebildet, mit der Sendespule 7 ein magnetisches Wechselfeld hervorzurufen. Die Empfangseinrichtung 11 detektiert das magnetische Wechselfeld mit den Empfangsspulen 8 und 9. Dabei fällt wegen der symmetrischen Anordnung und der Verschaltung der Empfangsspulen 8 und 9 in Quadrupolkonfiguration kein Messsignal an der Empfangseinrichtung 11 an, so lange auch die magnetische Konfiguration in der Vorrichtung 1 symmetrisch zu der Sendespule 7 ist. Wenn sich das Prüfobjekt 3 durch die Spulen 7 bis 9 hindurchbewegt, kommt es zu einer Veränderung des magnetischen Wechselfelds. Diese Veränderung stört die Symmetrie der magnetischen Konfiguration, und es kommt zu einem für das jeweilige Prüfobjekt 3 charakteristischen Verlauf des Messsignals über den Weg des Prüfobjekts 3 durch die Spulenanordnung 4. Auf diese Weise zeigt der zeitliche Verlauf des Messsignals die Veränderung des magnetischen Wechselfelds durch das hindurch bewegte Prüfobjekt 3 an. Wenn in dem Gegenstand 3 der Metallkörper 2 vorliegt, resultiert eine signifikant andere Veränderung des magnetischen Wechselfelds als ohne den Metallkörper 2. Dabei ist der jeweilige Verlauf des Messsignals neben Eigenschaften der Spulenanordnung 4, des Prüfobjekts 3 und des Metallkörpers 3 von einer Frequenz und einer Stromstärke eines elektrischen Stroms abhängig, der durch die Sendespule 7 fließt, um das magnetische Wechselfeld hervorzurufen. An die Empfangseinrichtung 11 ist eine Filtereinrichtung 12 angeschlossen, die aus dem Messsignal solche Signalanteile herausfiltert, die der Frequenz des magnetischen Wechselfelds entsprechen. Eine Auswerteeinrichtung 13 wertet diese Signalanteile aus.

In Fig. 1 ist außerdem eine Spulenachse 14 der Spulenanordnung 4 eingezeichnet, auf der zur Vorbereitung der erfindungsgemäßen Verfahren allein der Metallkörper 2 durch die Vorrichtung 1 hindurchbewegt werden kann, um eine Veränderung des mit der Sendespule 7 hervorgerufenen magnetischen Wechselfelds nur durch den Metallkörper 2 zu erfassen. Wenn die Erfassung dieser Veränderung für kugelförmige Metallkörper 2 unterschiedlicher Durchmesser und unterschiedlicher Zusammensetzungen bei unterschiedlichen Frequenzen des magnetischen Wechselfelds durchgeführt wird, können die Abhängigkeiten der Veränderung von diesen Parametern bestimmt werden, so dass die Veränderung des magnetischen Wechselfelds durch weitere kugelförmige Metallkörper 2 mit hoher Genauigkeit abgeschätzt werden kann. Hiervon wird bei den im Folgenden geschilderten erfindungsgemäßen Verfahren Gebrauch gemacht.

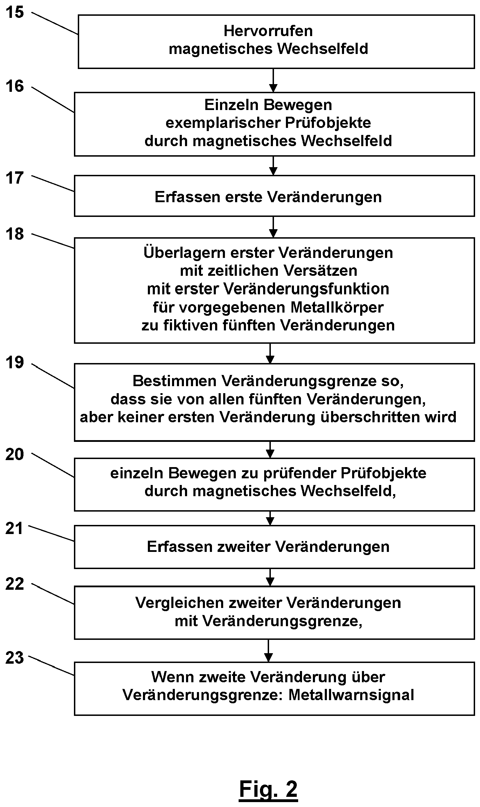

Das in **Fig. 2** in einem Flussdiagramm dargestellte erfindungsgemäße Verfahrens beginnt im Schritt 15 mit dem Hervorrufen des magnetischen Wechselfelds mit Hilfe der die Sendespule 7 umfassenden Sendeeinrichtung 10. Das magnetische Wechselfeld wird mit einer bestimmten Frequenz und Feldstärke hervorgerufen. Dann werden in einem Schritt 16 exemplarische Prüfobjekte 3 ohne Metallkörper 2 mit definierter Geschwindigkeit durch das magnetische Wechselfeld hindurchgeführt. Dabei werden in einem Schritt 17 erste Veränderungen des magnetischen Wechselfelds durch die hindurchgeführten Prüfobjekte 2 erfasst. In einem Schritt 18 werden anschließend die erfassten ersten Veränderungen mit unterschiedlichen zeitlichen Versätzen mit einer ersten Veränderungsfunktion zu fiktiven fünften Veränderungen überlagert. Die erste Veränderungsfunktion entspricht vierten Veränderungen des magnetischen Wechselfelds, die auftreten, wenn nur ein Metallkörper 2 vorgegebener Form, Größe und Zusammensetzung längs der Spulenachse 14 durch das magnetische Wechselfeld hindurchbewegt wird. Die fünften Veränderungen werden hier als fiktiv bezeichnet, weil sie nicht direkt erfasst werden, sondern aus der rechnerischen Überlagerung der ersten Veränderungen mit der ersten Veränderungsfunktion resultieren. Die unterschiedlichen zeitlichen Versätze entsprechen unterschiedlichen Relativlagen des Metallkörpers 2 längs der Spulenachse 14 gegenüber dem Prüfobjekt 3. In einem Schritt 19 wird dann eine Veränderungsgrenze so bestimmt, dass sie von allen fiktiven fünften Veränderungen, aber keiner der ersten Veränderungen überschritten wird. Wenn anschließend in einem Schritt 20 zu prüfende Prüfobjekte 3 einzeln durch das magnetische Wechselfeld hindurchbewegt werden, wobei in einem Schritt 21 daraus resultierende zweite Veränderungen des magnetischen Wechselfelds erfasst werden, dient die bestimmte Veränderungsgrenze zum Detektieren von Metallkörpern 2 in den Prüfobjekten 3. Dazu wird in einem Schritt 22 jede zweite Veränderung mit der Veränderungsgrenze verglichen und in einem Schritt 23 ein Metallwarnsignal generiert und ausgegeben, wenn die jeweilige zweite Veränderung die Veränderungsgrenze überschreitet.

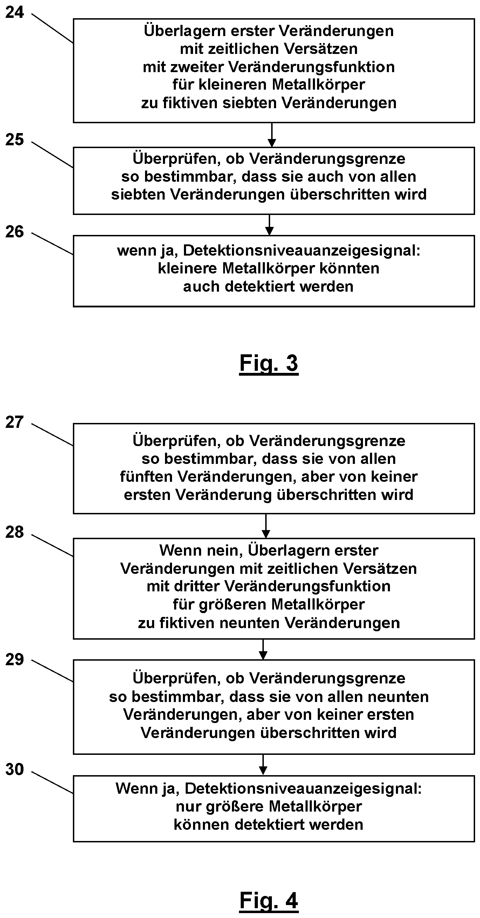

Die in **Fig. 3** in einem Flussdiagramm gezeigten zusätzlichen Schritte können zwischen den Schritten 18 und 19 gemäß Fig. 2 eingefügt werden. In einem Schritt 24 werden die ersten Veränderungen zusätzlich mit einer zweiten Veränderungsfunktion mit den zeitlichen Versätzen zu fiktiven siebten Veränderungen überlagert. Die zweite Veränderungsfunktion entspricht dabei sechsten Veränderungen des magnetischen Wechselfelds, die allein durch einen hindurchbewegten kleineren Metallkörper 2 verursacht werden. Dann schließt sich in einem Schritt 25 das Überprüfen an, ob die Veränderungsgrenze so bestimmbar ist, dass sie auch von allen siebten Veränderungen überschritten wird. Wenn dies der Fall ist, wird in einem Schritt 26 ein Detektionsniveauanzeigesignal generiert und ausgegeben, dass anzeigt, dass auch kleinere Metallkörper 2 detektiert werden könnten. Der Anwender des erfindungsgemäßen Verfahrens kann dann die Vorgabe für die zu detektierenden Metallkörper 2 auf die kleineren Metallkörper 2 verschärfen oder nicht. Abhängig davon wird dann in dem Schritt 19 gemäß Fig. 2 die Veränderungsgrenze bestimmt.

Auch die in **Fig. 4** in einem Flussdiagramm gezeigten zusätzlichen Schritte können zwischen den Schritten 18 und 19 gemäß Fig. 2 eingefügt werden. In einem Schritt 27 wird zunächst überprüft, ob die Veränderungsgrenze überhaupt so bestimmbar ist, dass sie von allen fünften Veränderungen aber von keiner der ersten Veränderungen überschritten wird. Wenn dies nicht der Fall ist, werden in einem Schritt 28 die ersten Veränderungen mit den zeitlichen Versätzen mit einer dritten Veränderungsfunktion zu fiktiven neunten Veränderungen überlagert, wobei die dritte Veränderungsfunktion einer achten Veränderung des magnetischen Wechselfelds durch einen allein hindurchgeführten größeren Metallkörper entspricht. Dann wird in einem Schritt 29 überprüft, ob die Veränderungsgrenze so bestimmbar ist, dass sie von allen neunten Veränderungen, aber von keiner der ersten Veränderungen überschritten wird. Wenn dies der Fall ist, wird in einem Schritt 30 das Detektionsniveauanzeigesignal ausgegeben, das diesmal anzeigt, dass nur größere Metallkörper detektiert werden könnten. Der Anwender des erfindungsgemäßen Verfahrens hat dann die Möglichkeit, die Anforderungen an die Detektion der Metallkörper herabzusetzen. In dem sich anschließenden Schritt 19 gemäß Fig. 2 kann dann die Veränderungsgrenze dementsprechend bestimmt werden.

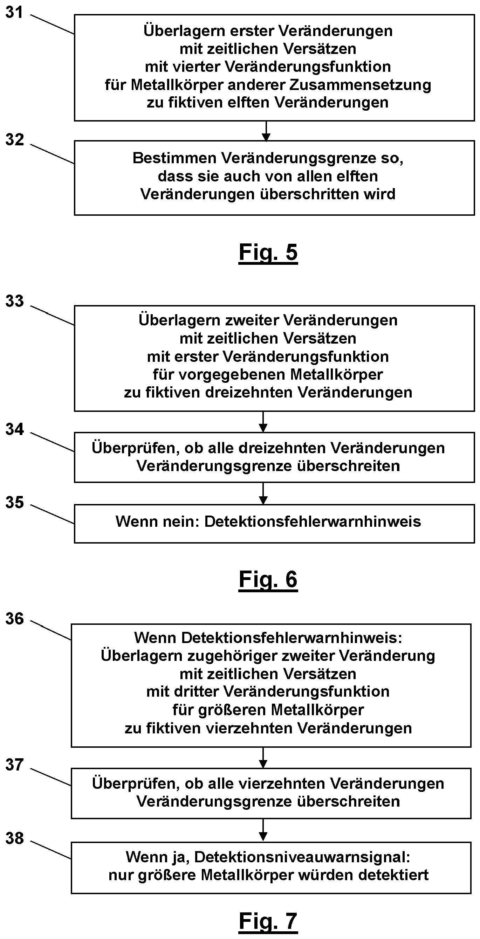

Die in **Fig. 5** in einem Flussdiagramm gezeigten Schritte können den Schritt 19 gemäß Fig. 2 ersetzen. Dabei werden zunächst in einem Schritt 31 die ersten Veränderungen mit den zeitlichen Versätzen mit einer vierten Veränderungsfunktion zu fiktiven elften Veränderungen überlagert. Dabei entspricht die vierte Veränderungsfunktion der Veränderung des magnetischen Wechselfelds, wie sie allein durch einen hindurchgeführten Metallkörper anderer Zusammensetzung hervorgerufen wird. Anschließend wird in dem Schritt 32 die Veränderungsgrenze so bestimmt, dass sie sowohl von allen fünften als auch von allen elften Veränderungen überschritten, aber von keiner der ersten Veränderungen überschritten wird. Damit ist die Veränderungsgrenze auch zur Detektion von Metallkörpern der anderen Zusammensetzung geeignet.

Die in **Fig. 6** in einem Flussdiagramm gezeigten zusätzlichen Schritten können an die Schritte gemäß Fig. 2 anschließen. Sie können sich auch an ein Verfahren anschließen, das sich von in Fig. 2 skizzierten Verfahren dadurch unterscheidet, dass statt der dort gezeigten Schritte 18 und 19 die Veränderungsgrenze auf andere Weise unter Berücksichtigung der ersten Veränderungen bestimmt wird. In einem Schritt 33 werden zumindest die zweiten Veränderungen zu allen zu prüfenden Prüfobjekten, zu denen kein Metallwarnsignal ausgegeben wurde, mit den zeitlichen Versätzen mit der ersten Veränderungsfunktion für den vorgegebenen Metallkörper zu fiktiven dreizehnten Veränderungen überlagert. Dann wird in einem Schritt 34 überprüft, ob alle dreizehnten Veränderungen die Veränderungsgrenze überschreiten. Wenn dies nicht der Fall ist, wird in einem Schritt 35 ein Detektionsfehlerwarnhinweis ausgegeben. Dieser zeigt an, dass das erfindungsgemäße Verfahren, bei dem zugehörigen zu prüfenden Prüfobjekt einen Metallkörper nicht sicher erkannt hätte.

Die in **Fig. 7** in einem Flussdiagramm dargestellten zusätzlichen Schritte können sich an die in dem Flussdiagramm gemäß Fig. 6 dargestellten Schritte anschließen. In einem Schritt 36 wird dann, wenn der Detektionsfehlerwarnhinweis gemäß Schritt 35 ausgegeben wurde, die zugehörige zweite Veränderung mit den zeitlichen Versätzen mit der dritten Veränderungsfunktion für den größeren Metallkörper zu fiktiven vierzehnten Veränderungen überlagert. Dann wird in einem Schritt 37 überprüft, ob alle vierzehnten Veränderungen die Veränderungsgrenze überschreiten. Wenn dies der Fall ist, wird in einem Schritt 38 der Detektionsfehlerwarnhinweis um einen Detektionsniveauwarnsignal ergänzt, das anzeigt, das nur größere Metallkörper einer bestimmten Größe sicher detektiert werden können. Der Benutzer hat dann die Möglichkeit, das Verfahren unverändert fortzusetzen, wenn ihm die Detektion der größeren Metallkörper reicht. Ansonsten muss er die Veränderungsgrenze neu bestimmen und kann dazu das Verfahren gemäß Fig. 2 neu aufsetzen.

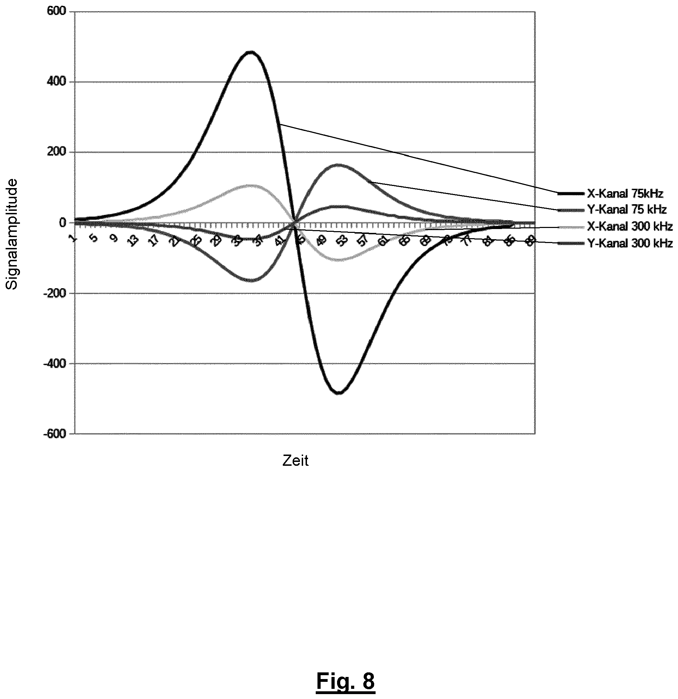

**Fig. 8** zeigt ein idealisiertes Messsignal der Vorrichtung gemäß Fig. 1 in einem X-Kanal und einem Y-Kanal für zwei unterschiedliche Frequenzen von 75 kHz und 300 kHz des magnetischen Wechselfelds aufgetragen über der Zeit. Das Messsignal zeigt die Veränderungen des jeweiligen magnetischen Wechselfelds durch einen hindurchgeführten kugelförmigen Metallkörper aus einem Nichteisenmetall von 6 mm Durchmesser an. Bei der Frequenz von 75 kHz sind die Amplituden in den X- und Y-Kanälen höher als bei der Frequenz von 300 kHz. Die sich aus dem Verhältnis der Amplituden in dem X-Kanal und dem Y-Kanal ergebenden Phasen sind aber gleich, das heißt nicht von der Frequenz des magnetischen Wechselfelds abhängig. Die Amplituden der Veränderungen sind nicht nur eine Funktion der Frequenz des magnetischen Wechselfelds, sondern auch des Durchmessers des kugelförmigen Metallkörpers. Auch die Phase der Veränderung hängt von der Größe des Metallkörpers ab. Zusätzlich sind beide Größen von der Zusammensetzung und den daraus resultierenden magnetischen Eigenschaften des Metallkörpers abhängig.

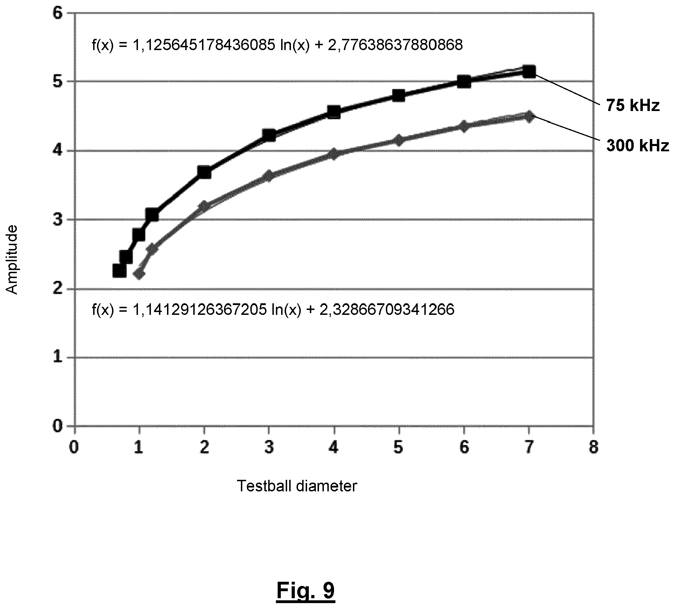

**Fig. 9** zeigt beispielhaft die Abhängigkeit der Amplituden der Veränderungen der magnetischen Wechselfelder von dem Durchmesser eines hindurchgeführten kugelförmigen Metallkörpers aus Eisen bei den Frequenz des magnetisches Wechselfelds von 75 kHz und 300 kHz. Dabei sind an die aufgetragenen Messwerte angefittete logarithmische Funktionen angegeben.

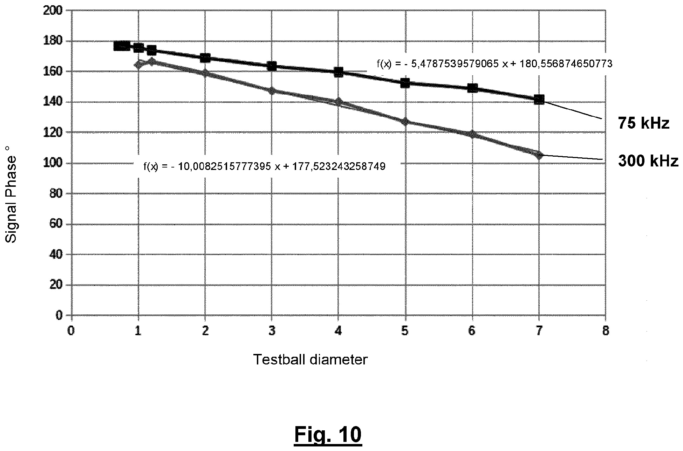

**Fig. 10** zeigt für die Veränderungen gemäß Fig. 9 die Abhängigkeit der Phase von dem Durchmesser des kugelförmigen Messobjekts aus Eisen ebenfalls, hier zusammen mit an die aufgetragenen Messwerte angefitteten linearen Funktionen.

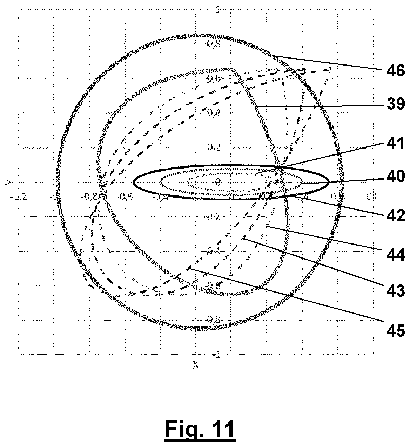

In **Fig. 11** ist in Polarkoordinaten zum einen eine erste Veränderung durch ein Prüfobjekt 39 ohne Metallkörper gezeigt. Zusätzlich sind Veränderungsfunktionen 40 bis 42 für einen kugelförmigen Metallkörper vorgegebener Größe, einen kleineren Metallkörper und einen größeren Metallkörper und aus deren Überlagerung mit der ersten Veränderung 39 resultierende fiktive Veränderungen 43 bis 45 gezeigt. Die Veränderungsfunktion 40 wird hier auch als erste Veränderungsfunktion bezeichnet, die Veränderungsfunktion 41 als zweite Veränderungsfunktion und die Veränderungsfunktion 42 als dritte Veränderungsfunktion. Entsprechend handelt es sich nach der Diktion dieser Anmeldung bei der fiktiven Veränderung 43 um eine fünfte Veränderung, bei der fiktiven Veränderung 44 um eine siebte Veränderung und bei der fiktiven Veränderung 45 um eine neunte Veränderung. Weiter ist in Fig. 9 eine Veränderungsgrenze 46 eingezeichnet, die von den Veränderungen 43 und 44, nicht aber von der Veränderung 44 überschritten wird. Die Veränderungsgrenze 46 wäre daher nicht geeignet, um den kleineren Metallkörper sicher zu detektieren, zu dem die Veränderungsfunktion 41 gehört. Es könnte aber eine andere Veränderungsgrenze 46 gezogen werden, die von der Veränderung 39 des Prüfobjekts ohne Metallkörper nicht überschritten wird, aber von allen fiktiven Veränderungen 43 bis 45.

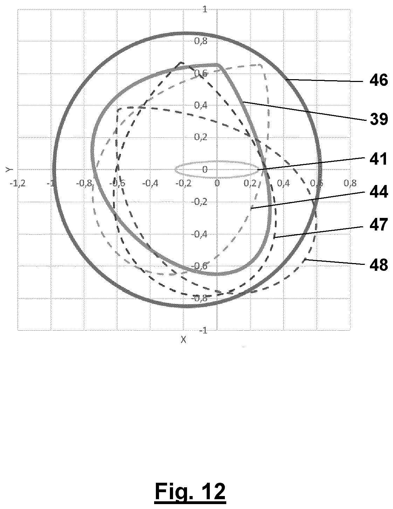

In **Fig. 12** sind neben der fiktiven Veränderung 44 gemäß Fig. 11 zusätzliche fiktive Veränderungen 47 und 48 dargestellt, die sich bei Überlagerung der Veränderung 39 mit der Veränderungsfunktion 41 mit anderen zeitlichen Versätzen ergeben, welche anderen Relativlagen des kleineren Metallkörpers 2 gegenüber dem Prüfobjekt 3 entsprechen. Zwar wird die Veränderungsgrenze 46 bei einer bestimmten Relativlage des Metallkörpers von der zugehörigen fiktiven Veränderung 48 überschritten. Um den kleineren Metallkörper jedoch in allen Relativlagen sicher detektieren zu können, müsste die Veränderungsgrenze 46 deutlich enger um die Veränderung 39 des Prüfobjekts 3 ohne Metallkörper 2 herum gezogen werden.

### BEZUGSZEICHENLISTE

- 1: Vorrichtung
- 2: Metallkörper
- 3: Prüfobjekt
- 4: Spulenanordnung
- 5: Schachtel
- 6: Pfeil
- 7: Sendespule
- 8, 9: Empfangsspule
- 10: Sendeeinrichtung
- 11: Empfangseinrichtung
- 12: Filtereinrichtung
- 13: Auswerteeinrichtung
- 14: Spulenachse
- 15-38: Schritt
- 39: erste Veränderung
- 40: erste Veränderungsfunktion
- 41: zweite Veränderungsfunktion
- 42: dritte Veränderungsfunktion
- 43: fiktive fünfte Veränderung
- 44: fiktive siebte Veränderung
- 45: fiktive neunte Veränderung
- 46: Veränderungsgrenze
- 47, 48: fiktive fünfte Veränderung

## Patentansprüche

1. Verfahren zur Detektion von Metallkörpern (2) in Prüfobjekten (3) mit den Schritten
- Hervorrufen eines magnetischen Wechselfelds,
- einzeln Bewegen von exemplarischen Prüfobjekten (3) ohne Metallkörper (2) mit definierter Geschwindigkeit durch das magnetische Wechselfeld,
- Erfassen von ersten Veränderungen (39) des magnetischen Wechselfelds durch die einzeln hindurch bewegten exemplarischen Prüfobjekte (3),
- Bestimmen einer Veränderungsgrenze (46) für Prüfobjekte (3) ohne Metallkörper (2) mit vorgegebener Form, Größe und Zusammensetzung unter Verwendung der ersten Veränderungen (39),
- einzeln Bewegen von zu prüfenden Prüfobjekten (3) durch das magnetische Wechselfeld,
- Erfassen einer zweiten Veränderung des magnetischen Wechselfelds durch das jeweilige einzeln hindurch bewegte zu prüfende Prüfobjekt (3),
- Vergleichen der zweiten Veränderung mit der Veränderungsgrenze (46),
- wenn die zweite Veränderung die Veränderungsgrenze (46) überschreitet, Generieren und Ausgeben eines Metallwarnsignals,
- wobei beim Bestimmen der Veränderungsgrenze (46) mindestens eine dritte Veränderung, die eine der ersten Veränderungen (39) oder eine von den ersten Veränderungen (39) abgeleitete generalisierte Veränderung ist, mit unterschiedlichen zeitlichen Versätzen mit einer ersten Veränderungsfunktion (40), die einer vierten Veränderung des magnetischen Wechselfelds beim Bewegen des Metallkörpers (2) der vorgegebenen Form, Größe und Zusammensetzung mit der definierten Geschwindigkeit durch das magnetische Wechselfeld entspricht, zu fiktiven fünften Veränderungen überlagert wird,
- wobei die Veränderungsgrenze (46) so bestimmt wird, dass sie von allen fünften Veränderungen, aber von keiner der ersten Veränderungen (39) überschritten wird,
**dadurch gekennzeichnet,**
- **dass** beim Bestimmen der Veränderungsgrenze (46) die mindestens eine dritte Veränderung mit den unterschiedlichen zeitlichen Versätzen mit einer zweiten Veränderungsfunktion (41), die einer sechsten Veränderung des magnetischen Wechselfelds beim Bewegen eines Metallkörpers (2) der vorgegebenen Form und Zusammensetzung, aber einer kleineren Größe mit der definierten Geschwindigkeit durch das magnetische Wechselfeld entspricht, zu fiktiven siebten Veränderungen (44) überlagert wird,
- wobei geprüft wird, ob die Veränderungsgrenze (46) so bestimmt werden kann, dass sie auch von allen siebten Veränderungen (44) überschritten wird, und
- wobei dann, wenn dies der Fall ist, ein Detektionsniveauanzeigesignal generiert und ausgegeben wird, welches anzeigt, dass auch Metallkörper (2) mit der kleineren Größe detektiert werden könnten.

2. Verfahren nach Anspruch 1, **dadurch gekennzeichnet, dass** dann, wenn es nicht möglich ist, die Veränderungsgrenze (46) so zu bestimmen, dass sie von allen fünften Veränderungen (43, 47, 48), aber von keiner der ersten Veränderungen (39) überschritten wird, ein Fehlersignal ausgegeben wird.

3. Verfahren nach Anspruch 2, **dadurch gekennzeichnet, dass** dann, wenn es nicht möglich ist, die Veränderungsgrenze (46) so zu bestimmen, dass sie von allen fünften Veränderungen (43, 47, 48) überschritten wird, aber von keiner der ersten Veränderungen (39) überschritten wird, die mindestens eine dritte Veränderung mit den unterschiedlichen zeitlichen Versätzen mit mindestens einer dritten Veränderungsfunktion (42), die einer achten Veränderung des magnetischen Wechselfelds beim Bewegen eines Metallkörpers (2) der vorgegebenen Form und Zusammensetzung, aber einer größeren Größe mit der definierten Geschwindigkeit durch das magnetische Wechselfeld entspricht, zu fiktiven neunten Veränderungen (45) überlagert wird,
- wobei geprüft wird, ob die Veränderungsgrenze (46) so bestimmt werden kann, dass sie von allen neunten Veränderungen (45), aber von keiner der ersten Veränderungen (39) überschritten wird, und
- wobei dann, wenn dies der Fall ist, ein Detektionsniveauanzeigesignal generiert und ausgegeben wird, welches anzeigt, dass zwar nicht Metallkörper (2) mit der vorgegebenen Größe, aber doch Metallkörper (2) mit der größeren Größe detektiert werden können.

4. Verfahren zur Detektion von Metallkörpern (2) in Prüfobjekten (3) mit den Schritten
- Hervorrufen eines magnetischen Wechselfelds,
- einzeln Bewegen von exemplarischen Prüfobjekten (3) ohne Metallkörper (2) mit definierter Geschwindigkeit durch das magnetische Wechselfeld,
- Erfassen von ersten Veränderungen (39) des magnetischen Wechselfelds durch die einzeln hindurch bewegten exemplarischen Prüfobjekte (3),
- Bestimmen einer Veränderungsgrenze (46) für Prüfobjekte (3) ohne Metallkörper (2) mit vorgegebener Form, Größe und Zusammensetzung unter Verwendung der ersten Veränderungen (39),
- einzeln Bewegen von zu prüfenden Prüfobjekten (3) durch das magnetische Wechselfeld,
- Erfassen einer zweiten Veränderung des magnetischen Wechselfelds durch das jeweilige einzeln hindurch bewegte zu prüfende Prüfobjekt (3),
- Vergleichen der zweiten Veränderung mit der Veränderungsgrenze (46),
- wenn die zweite Veränderung die Veränderungsgrenze (46) überschreitet, Generieren und Ausgeben eines Metallwarnsignals,
- wobei beim Bestimmen der Veränderungsgrenze (46) mindestens eine dritte Veränderung, die eine der ersten Veränderungen (39) oder eine von den ersten Veränderungen (39) abgeleitete generalisierte Veränderung ist, mit unterschiedlichen zeitlichen Versätzen mit einer ersten Veränderungsfunktion (40), die einer vierten Veränderung des magnetischen Wechselfelds beim Bewegen des Metallkörpers (2) der vorgegebenen Form, Größe und Zusammensetzung mit der definierten Geschwindigkeit durch das magnetische Wechselfeld entspricht, zu fiktiven fünften Veränderungen überlagert wird,
- wobei die Veränderungsgrenze (46) so bestimmt wird, dass sie von allen fünften Veränderungen, aber von keiner der ersten Veränderungen (39) überschritten wird,
**dadurch gekennzeichnet, dass** dann, wenn es nicht möglich ist, die Veränderungsgrenze (46) so zu bestimmen, dass sie von allen fünften Veränderungen (43, 47, 48), aber von keiner der ersten Veränderungen (39) überschritten wird,
- ein Fehlersignal ausgegeben wird und
- die mindestens eine dritte Veränderung mit den unterschiedlichen zeitlichen Versätzen mit mindestens einer dritten Veränderungsfunktion (42), die einer achten Veränderung des magnetischen Wechselfelds beim Bewegen eines Metallkörpers (2) der vorgegebenen Form und Zusammensetzung, aber einer größeren Größe mit der definierten Geschwindigkeit durch das magnetische Wechselfeld entspricht, zu fiktiven neunten Veränderungen (45) überlagert wird,
- wobei geprüft wird, ob die Veränderungsgrenze (46) so bestimmt werden kann, dass sie von allen neunten Veränderungen (45), aber von keiner der ersten Veränderungen (39) überschritten wird, und
- wobei dann, wenn dies der Fall ist, ein Detektionsniveauanzeigesignal generiert und ausgegeben wird, welches anzeigt, dass zwar nicht Metallkörper (2) mit der vorgegebenen Größe, aber doch Metallkörper (2) mit der größeren Größe detektiert werden können.

5. Verfahren nach einem der vorhergehenden Ansprüche, **dadurch gekennzeichnet, dass** die mindestens eine dritte Veränderung amplituden- und phasenrichtig mit dem jeweiligen zeitlichen Versatz mit der ersten Veränderungsfunktion (40) überlagert wird.

6. Verfahren nach einem der vorhergehenden Ansprüche, **dadurch gekennzeichnet, dass** die unterschiedlichen zeitlichen Versätze so ausgewählt werden, dass sie unterschiedlichen Lagen des Metallkörpers (2) der vorgegebenen Form, Größe und Zusammensetzung am vorderen Ende, am hinteren Ende und an mindestens einem Punkt mit Abständen zu dem vorderen Ende und dem hinteren Ende des jeweiligen exemplarischen Prüfobjekts (3) entsprechen.

7. Verfahren nach einem der vorhergehenden Ansprüche, **dadurch gekennzeichnet, dass** die erste Veränderungsfunktion (40) der vierten Veränderung des magnetischen Wechselfelds beim Bewegen des Metallkörpers (2) der vorgegebenen Form, Größe und Zusammensetzung durch das magnetische Wechselfeld auf einer Spulenachse (14) einer Spulenanordnung (4) für das Hervorrufen des magnetischen Wechselfelds und für das Erfassen der Veränderungen des magnetischen Wechselfelds entspricht.

8. Verfahren nach einem der vorhergehenden Ansprüche, **dadurch gekennzeichnet,**
- **dass** beim Bestimmen der Veränderungsgrenze (46) die mindestens eine dritte Veränderung mit den unterschiedlichen zeitlichen Versätzen mit mindestens einer vierten Veränderungsfunktion, die einer zehnten Veränderung des magnetischen Wechselfelds beim Bewegen eines Metallkörpers (2) der vorgegebenen Form und Größe, aber einer anderen Zusammensetzung mit der definierten Geschwindigkeit durch das magnetische Wechselfeld entspricht, zu fiktiven elften Veränderungen überlagert wird,
- wobei die Veränderungsgrenze (46) so bestimmt wird, dass sie auch von allen elften Veränderungen überschritten wird.

9. Verfahren nach einem der vorhergehenden Ansprüche, **dadurch gekennzeichnet, dass** jede Veränderungsfunktion (40-42) aus einer von der vorgegebenen Größe des Metallkörpers (2) sowie von einer Frequenz und einer Feldstärke des magnetischen Wechselfelds abhängigen Grundfunktion, die für Metallkörper (2) einer festen Form und Zusammensetzung und für zueinander äquivalente Spulenanordnungen (4) für das Hervorrufen des magnetischen Wechselfelds und das Erfassen der Veränderungen des magnetischen Wechselfelds definiert ist, durch zeitliches Skalieren bestimmt wird.

10. Verfahren nach Anspruch 9, **dadurch gekennzeichnet, dass** die Grundfunktion unter Erfassen von zwölften Veränderungen des jeweiligen magnetischen Wechselfelds beim Bewegen von Metallkörpern (2) der festen Form und Zusammensetzung und unterschiedlichen bekannten Größen mit bekannter Geschwindigkeit durch magnetische Wechselfelder unterschiedlicher bekannter Frequenzen und Feldstärken in einer der zueinander äquivalente Spulenanordnungen (4) bekannter Länge in Richtung ihrer Spulenachse (14) bestimmt wird.

11. Verfahren nach einem der vorhergehenden Ansprüche, **dadurch gekennzeichnet, dass** mit Metallkörpern (2) der vorgegebenen Form, Größe und Zusammensetzung mit unterschiedlichen Lagen in präparierten Prüfobjekten (3) überprüft wird, ob zu diesen präparierten Prüfobjekten (3) das Metallwarnsignal ausgegeben wird.

12. Verfahren nach einem der vorhergehenden Ansprüche, **dadurch gekennzeichnet, dass** jedes Prüfobjekt (3) zu dem das Metallwarnsignal ausgegeben wird, aussortiert wird und/oder mit einem Metallwarnhinweis auf einen enthaltenen Metallkörper (2) versehen wird.

13. Verfahren nach einem der vorhergehenden Ansprüche, **dadurch gekennzeichnet,**
- **dass** zu jedem zu überprüfenden Prüfobjekt (3), zu dem kein Metallwarnsignal ausgegeben wird, die zugehörige zweite Veränderung mit unterschiedlichen zeitlichen Versätzen mit einer ersten Veränderungsfunktion (40), die einer vierten Veränderung des magnetischen Wechselfelds beim Bewegen des Metallkörpers (2) der vorgegebenen Form, Größe und Zusammensetzung mit der definierten Geschwindigkeit durch das magnetische Wechselfeld entspricht, zu fiktiven dreizehnten Veränderungen überlagert wird und überprüft wird, ob alle fiktiven dreizehnten Veränderungen die Veränderungsgrenze (46) überschreiten,
- wobei dann, wenn dies nicht der Fall ist, ein Detektionsfehlerwarnhinweis generiert und ausgegeben wird.

14. Verfahren zur Detektion von Metallkörpern (2) in Prüfobjekten (3) mit den Schritten
- Hervorrufen eines magnetischen Wechselfelds,
- einzeln Bewegen von exemplarischen Prüfobjekten (3) ohne Metallkörper (2) mit definierter Geschwindigkeit durch das magnetische Wechselfeld,
- Erfassen von ersten Veränderungen (39) des magnetischen Wechselfelds durch die einzeln hindurch bewegten exemplarischen Prüfobjekte (3),
- Bestimmen einer Veränderungsgrenze (46) für Prüfobjekte (3) ohne Metallkörper (2) mit vorgegebener Form, Größe und Zusammensetzung unter Verwendung der ersten Veränderungen (39),
- einzeln Bewegen von zu prüfenden Prüfobjekten (3) durch das magnetische Wechselfeld,
- Erfassen einer zweiten Veränderung des magnetischen Wechselfelds durch das jeweilige einzeln hindurch bewegte zu prüfende Prüfobjekt (3),
- Vergleichen der zweiten Veränderung mit der Veränderungsgrenze (46),
- wenn die zweite Veränderung die Veränderungsgrenze (46) überschreitet, Generieren und Ausgeben eines Metallwarnsignals,
**dadurch gekennzeichnet,**
- **dass** zu jedem zu überprüfenden Prüfobjekt (3), zu dem kein Metallwarnsignal ausgegeben wird, die zugehörige zweite Veränderung mit unterschiedlichen zeitlichen Versätzen mit einer ersten Veränderungsfunktion (40), die einer vierten Veränderung des magnetischen Wechselfelds beim Bewegen des Metallkörpers (2) der vorgegebenen Form, Größe und Zusammensetzung mit der definierten Geschwindigkeit durch das magnetische Wechselfeld entspricht, zu fiktiven dreizehnten Veränderungen überlagert wird und überprüft wird, ob alle fiktiven dreizehnten Veränderungen die Veränderungsgrenze (46) überschreiten,
- wobei dann, wenn dies nicht der Fall ist, ein Detektionsfehlerwarnhinweis generiert und ausgegeben wird und die zugehörige zweite Veränderung mit den unterschiedlichen zeitlichen Versätzen mit mindestens einer dritten Veränderungsfunktion (42), die einer achten Veränderung des magnetischen Wechselfelds beim Bewegen eines Metallkörpers (2) der vorgegebenen Form und Zusammensetzung, aber einer größeren Größe mit der definierten Geschwindigkeit durch das magnetische Wechselfeld entspricht, zu fiktiven vierzehnten Veränderungen überlagert wird und überprüft wird, ob alle fiktiven vierzehnten Veränderungen die Veränderungsgrenze (46) überschreiten,
- wobei dann, wenn dies der Fall ist, ein Detektionsniveauwarnsignal generiert und ausgegeben wird, welches anzeigt, dass zwar nicht Metallkörper (2) mit der vorgegebenen Größe, aber doch Metallkörper (2) mit der größeren Größe detektiert würden.

15. Vorrichtung (1) zur Detektion von Metallkörpern (2) in Prüfobjekten (3) mit
- einer Spulenanordnung (4) für das Hervorrufen eines magnetischen Wechselfelds und für das Erfassen von Veränderungen (39) des magnetischen Wechselfelds,
- einer Fördereinrichtung zum Bewegen der Prüfobjekte (3) durch die Spulenanordnung (4) und
- einer Auswerteeinrichtung (13) zum Auswerten der erfassten Veränderungen (39) des magnetischen Wechselfelds,
**dadurch gekennzeichnet, dass** die Auswerteeinrichtung (13) zur automatisierten Durchführung der kennzeichnenden Merkmale des Verfahrens nach Anspruch 1, 4 und/oder 14 ausgebildet ist.

## Claims

1. Method for detection of metal bodies (2) in test objects (3) comprising the steps
- exciting a magnetic alternating field,
- individually moving exemplary test objects (3) without metal body (2) at a defined velocity through the magnetic alternating field,
registering first variations (39) of the magnetic alternating field by the exemplary test objects (3) individually moved therethrough,
- determining a variation limit (46) for test objects (3) without metal body (2) of a predetermined shape, size and composition using the first variations (39),
- individually moving test objects (3) to be tested through the magnetic alternating field,
- registering a second variation of the magnetic alternating field by the respective test object (3) individually moved therethrough,
- comparing the second variation to the variation limit (46),
- if the second variation exceeds the variation limit (46), generating and outputting a metal warning signal,
- wherein, in determining the variation limit (46), at least one third variation, which is one of the first variations (39) or a generalized variation derived from the first variations (39), is superimposed at different temporal offsets with a first variation function (40), which corresponds to a fourth variation of the magnetic alternating field when moving the metal body (2) of the predetermined shape, size and composition at the defined velocity through the magnetic alternating field, to provide virtual fifth variations,
- wherein the variation limit (46) is determined such that it is exceeded by all fifth variations but none of the first variations (39),
**characterized in**
- **that**, in determining the variation limit (46), the at least one third variation is superimposed at the different temporal offsets with a second variation function (41), which corresponds to a sixth variation of the magnetic alternating field when moving a metal body (2) of the predetermined shape and composition but of a smaller size at the defined velocity through the magnetic alternating field, to provide virtual seventh variations (44),
- wherein it is tested whether the variation limit (46) can be determined such that it is also exceeded by all seventh variations (44), and
- wherein, if this is the case, a detection level indication signal is generated and output, which indicates that also metal bodies (2) of the smaller size could be detected.

2. Method of claim 1, **characterized in that**, if it is not possible to determine the variation limit (46) such that it is exceeded by all fifth variations (43, 47, 48) but by none of the first variations (39), an error signal is output.

3. Method of claim 2, **characterized in that**, if it is not possible to determine the variation limit (46) such that it is exceeded by all fifth variations (43, 47, 48) but none of the first variations (39), the at least one third variation is superimposed at the different temporal offsets with at least one third variation function (42), which corresponds to an eighth variation of the magnetic alternating field when moving a metal body (2) of the predetermined shape and composition but of a larger size at the defined velocity through the magnetic alternating field, to provide virtual ninth variations (45),
- wherein it is tested whether the variation limit (46) can be determined such that it is exceeded by all ninth variations (45) but none of the first variations (39), and
wherein, if this is the case, a detection level indication signal is generated and output, which indicates that metal bodies (2) of the predetermined size can not be detected but that metal bodies (2) of the larger size can be detected.

4. Method for detection of metal bodies (2) in test objects (3) comprising the steps
- exciting a magnetic alternating field,
- individually moving exemplary test objects (3) without metal body (2) at a defined velocity through the magnetic alternating field,
- registering first variations (39) of the magnetic alternating field by the exemplary test objects (3) individually moved therethrough,
- determining a variation limit (46) for test objects (3) without metal body (2) of predetermined shape, size and composition using the first variation (39),
- individually moving test objects (3) to be tested through the magnetic alternating field,
- registering a second variation of the magnetic alternating field by the respective test object (3) to be tested individually moved therethrough,
- comparing the second variation to the variation limit (46),
- if the second variation exceeds the variation limit (46) generating and outputting a metal warning signal,
- wherein, in determining the variation limit (46), at least one third variation, which is one of the first variations (39) or a generalized variation derived from the first variations (39), is superimposed at different temporal offsets with a first variation function (40), which corresponds to a fourth variation of the magnetic alternating field when moving the metal body (2) of the predetermined shape, size and composition at the defined velocity through the magnetic alternating field, to provide virtual fifth variations,
wherein the variation limit (46) is determined such that it is exceeded by all fifth variations but none of the first variations (39),
**characterized in that**, if it is not possible to determine the variation limit (46) such that it is exceeded by all fifth variations (43, 47, 48) but none of the first variations (39),
- an error signal is output, and
- the at least one first variation is superimposed at the different temporal offsets with at least one third variation function (42), which corresponds to an eighth variation of the magnetic alternating field when moving a metal body (2) of the predetermined shape and composition but of a larger size at the defined velocity through the magnetic alternating field, to provide virtual ninth variations (45),
- wherein it is tested whether the variation limit (46) can be determined such that it is exceeded by all ninth variations (45) but none of the first variations (39), and
- wherein, if this is the case, a detection level indication signal is generated and output, which indicates that metal bodies (2) of the predetermined size can not be detected but that metal bodies (2) of the larger can be detected.

5. Method of any of the preceding claims, **characterized in that** the at least one third variation is superimposed with the first variation function (40) at the respective temporal offset at a correct amplitude and phase.

6. Method of any of the preceding claims, **characterized in that** the different temporal offsets are selected such that they correspond to different positions of the metal body (2) of the predetermined shape, size and composition at a front end, a back end and at least one point at distances to the front end and the back end of the respective exemplary test object (3).

7. Method of any of the preceding claims, **characterized in that** the first variation function (40) corresponds to the fourth variation of the magnetic alternating field when moving the metal body (2) of the predetermined shape, size and composition through the magnetic alternating field on a coil axis (14) of a coil arrangement (4) for exciting the magnetic alternating field and for registering the variations of the magnetic alternating field.

8. Method of any of the preceding claims, **characterized in**
- **that**, in determining the variation limit (46), the at least one third variation is superimposed at the different temporal offsets with at least one fourth variation function, which corresponds to a tenth variation of the magnetic alternating field when moving a metal body (2) of the predetermined shape and size but of another composition at the defined velocity though the magnetic alternating field, to provide virtual eleventh variations,
- wherein the variation limit (46) is determined such that it is also exceeded by all eleventh variations.

9. Method of any of the preceding claims, **characterized in that** each variation function (40-42) is determined from a basic function depending on the predetermined size of the metal body (2) and on a frequency and a field intensity of the magnetic alternating field, which is defined for metal bodies (2) of a fixed shape and composition and for equivalent coil arrangements (4) for exciting the magnetic alternating field and for registering the variations of the magnetic alternative field, by temporal scaling.

10. Method of claim 9, **characterized in that** the basic function is determined under registering twelve variations of the respective magnetic alternating field when moving bodies (2) of the fixed shape and composition and different known sizes at known velocities through magnetic alternating fields of different known frequencies and field intensities in one of the equivalent coil arrangements (4) of a known length in direction of its coil axis (14).

11. Method of any of the preceding claims, **characterized in that** it is tested using metal bodies (2) of the predetermined shape, size and composition at different positions within prepared test objects (3) whether the metal warning signal is output for these prepared test objects (3).

12. Method of any of the preceding claims, **characterized in that** each test object (3), for which the metal warning signal is output, is separated and/or provided with a metal warning indication with regard to a contained metal body (2).

13. Method of any of the preceding claims, **characterized in**
- **that**, for each test object (3) to be tested for which no metal warning signal is output, the associated second variation is superimposed at different temporal offsets with a first variation function (40), which corresponds to a fourth variation of the magnetic alternating field when moving the metal body (2) of the predetermined shape, size and composition at the defined velocity through the magnetic alternating field, to provide virtual thirteenth variations, and it is tested whether all virtual thirteenth variations exceed the variation limit (46),
- wherein, if this is not case, a detection error warning indication is generated and output.

14. Method for detection of metal bodies (2) in test objects (3) comprising the steps:
- exciting a magnetic alternating field,
- individually moving exemplary test objects (3) without metal body (2) at a defined velocity through the magnetic alternating field,
- registering first variations (39) of the magnetic alternating field by the exemplary test objects (3) individually moved therethrough,
- determining a variation limit (46) for test objects (3) without metal body (2) of a predetermined shape, size and composition using the first variations (39),
- individually moving test objects (3) to be tested through the magnetic alternating field,
- registering a second variation of the magnetic alternating field by the respective test object (3) to be tested individually moved therethrough,
- comparing the second variation to the variation limit (46),
- if the second variation exceeds the variation limit (46), generating an outputting metal warning signal,
**characterized in**
- **that** for each test object (3) to be tested, for which no metal warning signal is output, the associated second variation is superimposed at different temporal offsets with a first variation function (40), which corresponds to a fourth variation of the magnetic alternating field when moving the metal body (2) of the predetermined shape, size and composition at the defined velocity through the magnetic alternating field, to provide virtual thirteenth variations, and that it is tested whether all virtual thirteenth variations exceed the variation limit (46),
- wherein, if this is not the case, a detection error warning signal is generated and output, and the associated second variation is superimposed at the different temporal offsets with at least one third variation function (42), which corresponds to an eighth variation of the magnetic alternating field when moving a metal body (2) of the predetermined shape and composition but of a larger size at the defined velocity through the magnetic alternating field, to provide virtual fourteenth variations, and it is testes whether all virtual fourteenth variations exceed the variation limit (46),
- wherein, if this is a case, a detection level warning signal is generated and output which indicates, that metal bodies (2) of the predetermined size would not be detected but that metal bodies (2) of the larger size would be detected.

15. Apparatus (1) for detection of metal bodies (2) in test objects (3) comprising
- a coil arrangement (4) for the excitation of a magnetic alternating field and for the registration of variations (39) of the magnetic alternating field,
- a conveying device for moving the test objects (3) through the coil arrangement (4), and
- an evaluation device (13) for evaluating the registered variations (39) of the magnetic alternating field,
**characterized in that** the evaluation device (13) is configured for automatically executing the characterising features of the method of claim 1, 4 and/or 14.

## Revendications

1. Procédé de détection de corps métalliques (2) dans des objets de test (3) comprenant les étapes consistant à créer un champ magnétique alternatif,
- à déplacer individuellement des exemples d'objets de test (3) sans corps métalliques (2) à une vitesse définie à travers le champ magnétique alternatif,
- à détecter les premiers changements (39) du champ magnétique alternatif à travers les objets de test exemplaires (3) déplacés individuellement,
- à déterminer une limite de changement (46) pour les objets de test (3) sans corps métallique (2) ayant une forme, une taille et une composition prédéterminées à l'aide des premiers changements (39),
- à déplacer individuellement les objets de test à vérifier (3) à travers le champ magnétique alternatif, à détecter un deuxième changement dans le champ magnétique alternatif à l'aide de l'objet de test (3) individuel déplacé à tester,
- à comparer le deuxième changement à la limite de changement (46),
- si le deuxième changement dépasse la limite de changement (46), à générer et émettre un signal d'avertissement de métal,
- au moins un troisième changement, qui est l'un des premiers changements (39) ou un changement généralisé dérivé des premiers changements (39) étant, lors de la détermination de la limite de changement (46), se recoupant avec différents décalages temporels avec une première fonction de changement (40), qui correspond à un quatrième changement du champ magnétique alternatif lors du déplacement du corps métallique (2) de forme, de taille et de composition prédéterminées à la vitesse définie à travers le champ magnétique alternatif pour créer des cinquièmes changements fictif,
- la limite de changement (46) étant déterminé de telle sorte qu'elle soit dépassée par tous les cinquièmes changements, mais ne soit dépassée par aucun des premiers changements (39),
**caractérisé en ce que**
- lors de la détermination de la limite de changement (46), au moins un troisième changement se recoupe avec différents décalages temporels avec une deuxième fonction de changement (41), qui correspond à un sixième changement du champ magnétique alternatif lors du déplacement d'un corps métallique (2) de forme et de composition prédéterminées, mais d'une taille plus petite à une vitesse définie à travers le champ magnétique alternatif, pour créer des septièmes changements fictifs (44),
- étant vérifié si la limite de changement (46) est déterminée de telle sorte qu'elle est également dépassée par tous les septièmes changements (44) et
- si tel est le cas, un signal d'affichage de niveau de détection étant généré et émis, qui indique que des corps métalliques (2) de plus petite taille pourraient également être détectés.

2. Procédé selon la revendication 1 **caractérisé en ce qu'**ensuite, lorsqu'il n'est pas possible de déterminer la limite de changement (46) de telle sorte qu'elle soit dépassée par tous les cinquièmes changements (43, 47, 48), mais par aucun des premiers changements (39), un signal d'erreur est émis.

3. Procédé selon la revendication 2, **caractérisé en ce que** s'il n'est pas possible de déterminer la limite de changement (46) de telle sorte qu'elle soit dépassée par tous les cinquièmes changements (43, 47, 48) mais par aucun des premiers changements (39), au moins un troisième changement avec les différents décalages temporels avec au moins une troisième fonction de changement (42), qui se recoupe avec un huitième changement du champ magnétique alternatif lors du déplacement d'un corps métallique (2) de forme et de composition prédéterminées, mais d'une taille plus grande à une vitesse définie par le biais du champ magnétique alternatif, pour créer des neuvièmes changements fictifs (45)
- étant vérifié si la limite de changement (46) peut être déterminée de telle sorte qu'elle soit dépassée par toutes les neuvièmes modifications (45), mais par aucune des premières modifications (39), et
- si tel est le cas, un signal d'affichage de niveau de détection étant généré et émis, qui indique que des corps métalliques (2) ayant la taille prédéterminée ne peuvent pas être détectés, mais que des corps métalliques (2) ayant la taille plus grande peuvent être détectés.

4. Procédé de détection de corps métalliques (2) dans des objets de test (3) comprenant les étapes consistant à créer un champ magnétique alternatif,
- à déplacer individuellement des exemples d'objets de test (3) sans corps métalliques (2) à une vitesse définie à travers le champ magnétique alternatif,
- à détecter les premiers changements (39) du champ magnétique alternatif à travers les objets de test exemplaires (3) déplacés individuellement,
- à déterminer une limite de changement (46) pour les objets de test (3) sans corps métallique (2) ayant une forme, une taille et une composition prédéterminées à l'aide des premiers changements (39),
- à déplacer individuellement les objets de test à vérifier (3) à travers le champ magnétique alternatif,
- à détecter un deuxième changement dans le champ magnétique alternatif à l'aide de l'objet de test (3) individuel déplacé à tester,
- à comparer le deuxième changement à la limite de changement (46),
- si le deuxième changement dépasse la limite de changement (46), à générer et émettre un signal d'avertissement de métal,
- au moins un troisième changement, qui est l'un des premiers changements (39) ou un changement généralisé dérivé des premiers changements (39) étant, lors de la détermination de la limite de changement (46), se recoupant avec différents décalages temporels avec une première fonction de changement (40), qui correspond à un quatrième changement du champ magnétique alternatif lors du déplacement du corps métallique (2) de forme, de taille et de composition prédéterminées à la vitesse définie à travers le champ magnétique alternatif pour créer des cinquièmes changements fictif,
- les limites de changement (46) étant déterminées de telle sorte qu'elles soient dépassées par tous les cinquièmes changements, mais ne soit dépassées par aucun des premiers changements (39), **caractérisé en ce qu'**ensuite, lorsqu'il n'est pas possible de déterminer la limite de changement (46) de telle sorte qu'elle soit dépassée par tous les cinquièmes changements (43, 47, 48), mais par aucun des premiers changements (39),
- un signal d'erreur est émis,
- au moins troisième changement se recoupe avec différents décalages temporels avec au moins une troisième fonction de changement (42), qui correspond à un huitième changement du champ magnétique alternatif lors du déplacement d'un corps métallique (2) de forme et de composition prédéterminées, mais d'une taille plus grande à une vitesse définie à travers le champ magnétique alternatif, pour créer des neuvièmes changements fictifs (45),
- étant vérifié si la limite de changement (46) peut être déterminée de telle sorte qu'elle soit dépassée par toutes les neuvièmes modifications (45), mais par aucune des premières modifications (39), et
- si tel est le cas, un signal d'affichage de niveau de détection étant généré et émis, qui indique que des corps métalliques (2) ayant la taille prédéterminée ne peuvent pas être détectés, mais que des corps métalliques (2) ayant la taille plus grande peuvent être détectés.

5. Procédé selon l'une des revendications précédentes, **caractérisé en ce que** le au moins troisième changement est superposé à la première fonction de changement (40) en amplitude et en phase avec, à chaque fois, le décalage temporel respectif.

6. Procédé selon l'une des revendications précédentes, **caractérisé en ce que** les différents décalages temporels sont choisis de manière à correspondre à différentes positions du corps métallique (2) de forme, taille et composition prédéterminées à l'extrémité avant, à l'extrémité arrière et à au moins un point avec des distances par rapport à l'extrémité avant et à l'extrémité arrière de l'objet de test exemplaire respectif (3).

7. Procédé selon l'une des revendications précédentes, **caractérisé en ce que** la première fonction de changement (40) correspond au quatrième changement du champ magnétique alternatif lors du déplacement du corps métallique (2) de forme, de taille et de composition prédéterminées à travers le champ magnétique alternatif sur un axe de bobine (14) d'un agencement de bobines (4) pour produire le champ magnétique alternatif et pour détecter les changements dans le champ magnétique alternatif.

8. Procédé selon l'une des revendications précédentes, **caractérisé en ce que**
- lors de la détermination de la limite de changement (46), le au moins un troisième changement avec les différents décalages temporels se recoupe avec une quatrième fonction de changement, qui correspond à un dixième changement du champ magnétique alternatif lors du déplacement d'un corps métallique (2) de forme et de composition prédéterminées, mais de taille plus petite à une vitesse définie à travers le champ magnétique alternatif, pour créer des onzièmes changements fictifs,
- la limite de changement (46) étant déterminée de telle sorte qu'elle est également dépassée par tous les onzièmes changements.

9. Procédé selon l'une des revendications précédentes, **caractérisé en ce que** chaque fonction de changement (40-42) est définie à partir d'une fonction de base qui dépend de la taille prédéterminée du corps métallique (2) ainsi que d'une fréquence et d'une intensité de champ magnétique alternatif, qui est déterminée par mise à l'échelle temporelle pour des corps métalliques (2) de forme et de composition fixes et pour des agencements de bobines mutuellement équivalents (4) pour produire le champ magnétique alternatif et détecter les changements dans le champ magnétique alternatif.

10. Procédé selon la revendication 9, **caractérisé en ce que** la fonction de base consiste à détecter des douzièmes variations du champ magnétique alternatif respectif lors du déplacement de corps métalliques (2) de forme et de composition fixes et de différentes tailles connues à une vitesse connue au moyen de champs magnétiques alternatifs de différentes fréquences et intensités de champ connues dans l'un des agencements de bobines mutuellement équivalents (4) de longueur connue sont déterminées dans la direction de leur axe de bobine (14).

11. Procédé selon l'une des revendications précédentes, **caractérisé en ce que** des corps métalliques (2) de forme, de taille et de composition prédéterminées avec des positions différentes dans des objets de test préparés (3) sont utilisés pour vérifier si le signal d'avertissement de métal est émis pour ces objets de test préparés (3).

12. Procédé selon l'une des revendications précédentes, **caractérisé en ce que** chaque objet de test (3) pour lequel le signal d'avertissement de métal est émis est trié et/ou est doté d'un avertissement de métal indiquant un corps métallique (2) contenu à l'intérieur.

13. Procédé selon l'une des revendications précédentes, **caractérisé en ce que** pour chaque objet de test (3) pour lequel aucun signal d'avertissement de métal
- n'est émis, le deuxième changement associé avec différents décalages temporels avec une première fonction de changement (40), qui correspond à un quatrième changement du champ magnétique alternatif lors du déplacement du corps métallique (2) de forme, de taille et de composition prédéterminées à une vitesse définie à travers le champ magnétique alternatif, est superposé et vérifié pour créer des treizièmes changements fictifs et étant vérifié si tous les treizièmes changements fictifs dépassent la limite de changement (46),
- si tel n'est pas le cas, un avertissement d'erreur de détection étant généré et émis.

14. Procédé de détection de corps métalliques (2) dans des objets de test (3) comprenant les étapes consistant
- à créer un champ magnétique alternatif,
- à déplacer individuellement des objets de test exemplaires (3) sans corps métallique (2) à une vitesse définie à travers le champ magnétique alternatif,
- à détecter les premiers changements (39) du champ magnétique alternatif à travers les objets de test exemplaires (3) déplacés individuellement,
- à déterminer une limite de changement (46) pour les objets de test (3) sans corps métallique (2) ayant une forme, une taille et une composition prédéterminées à l'aide des premiers changements (39),
- à déplacer individuellement les objets de test à vérifier (3) à travers le champ magnétique alternatif, à détecter un deuxième changement dans le champ magnétique alternatif à l'aide de l'objet de test (3) individuel déplacé à tester,
- à comparer le deuxième changement à la limite de changement (46),
- si le deuxième changement dépasse la limite de changement (46), à générer et émettre un signal d'avertissement de métal,
**caractérisé en ce que**
- pour chaque objet de test (3) à vérifier, pour lequel aucun signal d'avertissement de métal n'est émis, le deuxième changement associé avec différents décalages temporels avec une première fonction de changement (40), qui est un quatrième changement du champ magnétique alternatif lors du déplacement le corps métallique (2) de forme, de taille et de composition prédéterminées correspond à la vitesse définie dans le champ magnétique alternatif, est superposé à des treizièmes changements fictifs et étant vérifié si tous les treizièmes changements fictifs dépassent la limite de changement (46),
- si ce n'est pas le cas, un avertissement d'erreur de détection étant généré et émis et le deuxième changement associé avec les différents décalages temporels avec au moins une troisième fonction de changement (42), qui est un huitième changement du champ magnétique alternatif lors du déplacement un corps métallique (2) de forme et de composition prédéterminées, mais de taille plus grande à une vitesse définie à travers le champ magnétique alternatif, est superposé pour créer des quatorzièmes changements fictifs et étant vérifié si tous les quatorzièmes changements fictifs dépassent la limite de changement (46),
- si tel est le cas, un signal d'avertissement de niveau de détection étant généré et émis, qui indique que des corps métalliques (2) ayant la taille prédéterminée ne peuvent pas être détectés, mais que des corps métalliques (2) ayant la taille plus grande peuvent être détectés.

15. Dispositif (1) pour détecter des corps métalliques (2) dans des objets de test (3) avec
- un agencement de bobines (4) pour produire un champ magnétique alternatif et pour détecter des changements (39) dans le champ magnétique alternatif,
- un dispositif de transport pour déplacer les objets de test (3) à travers l'agencement de bobines (4) et
- un dispositif d'évaluation (13) pour évaluer les modifications détectées (39) dans le champ magnétique alternatif,
**caractérisé en ce que** le dispositif d'évaluation (13) est conçu pour exécuter automatiquement les caractéristiques du procédé selon la revendication 1, 4 et/ou 14.
